(19)

Europäisches Patentamt
European Patent Office
Office européen des brevets

(11) **EP 4 289 802 A1**

(12) **EUROPEAN PATENT APPLICATION**
published in accordance with Art. 153(4) EPC

(43) Date of publication:
**13.12.2023 Bulletin 2023/50**

(21) Application number: **22749835.9**

(22) Date of filing: **04.02.2022**

(51) International Patent Classification (IPC):
*C03C 3/091* (2006.01)     *C03C 3/093* (2006.01)
*C03C 3/097* (2006.01)     *C03C 12/00* (2006.01)

(52) Cooperative Patent Classification (CPC):
**C03C 3/091; C03C 3/093; C03C 3/097; C03C 12/00**

(86) International application number:
**PCT/JP2022/004566**

(87) International publication number:
**WO 2022/168964 (11.08.2022 Gazette 2022/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.02.2021 JP 2021017863**

(71) Applicant: **NIPPON SHEET GLASS COMPANY, LIMITED**
**Tokyo 108-6321 (JP)**

(72) Inventor: **FUJIWARA Kosuke**
**Tokyo 108-6321 (JP)**

(74) Representative: **Cabinet Beau de Loménie**
**158, rue de l'Université**
**75340 Paris Cedex 07 (FR)**

(54) **GLASS COMPOSITION, AND GLASS FILLER AND METHOD FOR PRODUCING SAME**

(57) Provided is a glass composition including tin oxide, wherein a content of the tin oxide is, in mass%, $0.1 \leq T\text{-}SnO_2 \leq 2.5$, where $T\text{-}SnO_2$ represents total tin oxide calculated as $SnO_2$. The glass filler formed of this glass composition may be a flaky glass, a chopped strand, a milled fiber, glass powder, a glass bead, a flat fiber, a thin glass piece, or the like. This glass composition is suitable for stably manufacturing, for example, a glass filler.

FIG.1A

EP 4 289 802 A1

**Description**

TECHNICAL FIELD

The present invention relates to a glass composition, a glass filler formed of the composition, and a method for manufacturing the glass filler. The present invention further relates to a resin composition, a paint, an ink composition, and a cosmetic including the glass filler.

BACKGROUND ART

The strength or the dimensional accuracy of a resin molded article can be improved by dispersing a glass filler in a resin matrix. Known fillers for this purpose include glass fillers in the form of, for example, flakes, fibers, powder, or beads. Glass fillers can be incorporated in paints to be applied as a lining material to a surface of a metal or concrete. Known fillers for this purpose include glass fillers in the form of, for example, flakes. As well as being used as reinforcing fillers, glass fillers can be incorporated, for example, as a pigment in various products such as resin compositions, paints, ink compositions, and cosmetics.

A glass filler whose surface is coated with a metal shows a metallic color. A glass filler whose surface is coated with a metal oxide shows an interference color due to interference of reflected light. Glass fillers (coated glass fillers) having a surface coating containing a metal or a metal oxide as a main component can be used, for example, as glitter pigments and are becoming widely used in applications where color and gloss are given priority, such as in paints or cosmetics. Known fillers for incorporation as glitter pigments in paints or cosmetics include glass fillers in the form of, for example, scales.

Further, resin compositions are widely included as electrically insulating members and mechanical members in various parts of electronic devices. Examples of the electrically insulating members include connector housings used for surface-mount technology (SMT), flexible printed circuits (FPCs), board-to-board, central processing unit (CPU) sockets, memory cards, edge connectors, optical connectors, and the like, reactance bobbins used for liquid crystal display (LCD) backlights, coils, flats, transformers, magnetic heads, and the like, switches used for relay cases, relay base switches, reflow DIP switches, tact switches, and the like, sensor cases, capacitor casings, volume casings, and trimmer casings. Examples of the mechanical members include lens holders and pickup bases for optical pickups, insulators and terminals for micromotors, and drums for laser printers. Resin compositions are also included in films such as base films for FPCs and base films for copper clad laminates. Some printed circuit boards mounted in electronic devices also include boards formed of resin compositions. Some printed wiring boards having no electronic parts installed yet also include boards formed of resin compositions. Hereinafter, in the present specification, printed circuit boards and printed wiring boards are collectively referred to as "printed boards".

A resin composition as described above includes a thermoplastic resin and an inorganic filler, and further includes a curing agent, a modifying agent, or the like, if necessary. A glass filler is sometimes used as the inorganic filler. A typical glass filler is a flaky glass. Printed boards can further include a glass fiber. In recent years, to meet the demand for reducing the size of electronic devices and the demand for reducing the thickness of electronic devices and thereby achieving high performance, a reduction in permittivity is desired of resin compositions and, accordingly, of materials forming the resin compositions.

Patent Literature 1 discloses a flaky glass having C-glass composition formulated with a focus on chemical durability, a flaky glass having E-glass composition developed for electrical appliances, and a flaky glass having common glass composition for glass sheets. Patent Literature 2 discloses a flaky glass with improved thermal resistance, chemical durability, and ease of shaping which are achieved by controlling the $SiO_2$ content, the $Al_2O_3$ content, and the total alkali metal oxide content ($Li_2O + Na_2O + K_2O$). Patent Literature 3 discloses a glass fiber formed of a low-permittivity glass composition.

CITATION LIST

Patent Literature

    Patent Literature 1: JP S63-201041 A
    Patent Literature 2: WO 2010/024283 A1
    Patent Literature 3: JP S62-226839 A

SUMMARY OF INVENTION

Technical Problem

Glass compositions are required to have properties suitable for mass production. A long glass fiber can be obtained, for example, by spinning a raw glass molten in a refractory furnace. In such a glass fiber manufacturing method, the glass fiber is likely to break due to bubbles in the raw glass. A flaky glass can be obtained, for example, by crushing a hollow glass film formed of a raw glass molten in a refractory furnace. In such a flaky glass manufacturing method, the hollow glass film is likely to break due to bubbles in the raw glass. A chopped strand can be obtained, for example, by cutting a glass fiber formed by spinning a raw glass molten in a refractory furnace. Also in such a chopped strand manufacturing method, the glass fiber is likely to break due to bubbles in the raw glass.

In particular, in the case of a low-permittivity glass composition, which has a relatively high viscosity, bubbles occurring during melting of glass raw materials are likely to be left in the resulting raw glass.

According to Patent Literatures 1 to 3, the glass compositions described therein are free of a refining agent for defoaming molten raw glass, or the refining capabilities of the glass compositions described therein in melting of glass are not discussed.

An object of the present invention is to provide a glass composition from which a glass filler or a glass fiber can be stably manufactured.

Solution to Problem

The present inventor has revealed that such a glass composition can be obtained by employing tin oxide as a refining agent and defining the $T\text{-}SnO_2$ content.

The glass composition of the present invention is a glass composition including tin oxide, wherein a content of the tin oxide is, in mass%, $0.1 \leq T\text{-}SnO_2 \leq 2.5$, where $T\text{-}SnO_2$ represents total tin oxide calculated as $SnO_2$.

The glass fiber of the present invention is a glass fiber formed of the glass composition of the present invention, while the glass filler of the present invention is a glass filler formed of the glass composition of the present invention.

The coated glass filler of the present invention includes:

the above glass filler of the present invention; and
a coating provided on a surface of the glass filler, wherein
the coating includes a metal or a metal oxide as a main component.

The glass filler and the coated glass filler can be added, for example, to various compositions such as resin compositions, paints, ink compositions, and cosmetics. The resin composition, the paint, the ink composition, and the cosmetic of the present invention includes at least one selected from the above glass filler of the present invention and the above coated glass filler of the present invention.

The glass filler manufacturing method of the present invention is a glass filler manufacturing method including:

melting the glass composition of the present invention; and
shaping the molten glass composition into a glass filler.

Advantageous Effects of Invention

A glass composition from which a glass filler or a glass fiber can be stably manufactured can be obtained according to the present invention. Moreover, a glass composition that emits light by ultraviolet irradiation thereof can be obtained. Light emission by ultraviolet irradiation is useful when the glass composition is used as a pigment, a material for sensors, a material for lights, a material for architecture, or the like.

BRIEF DESCRIPTION OF DRAWINGS

FIG. 1A is a perspective view showing an example of a flaky glass.
FIG. 1B is a plan view of the flaky glass shown in FIG. 1A.
FIG. 2 is a cross-sectional view showing an example of a flaky glass manufacturing apparatus.
FIG. 3 is a cross-sectional view showing an example of a chopped strand manufacturing apparatus.
FIG. 4 is a cross-sectional view showing an example of a chopped strand manufacturing apparatus.

FIG. 5 is a perspective view showing an example of a flat fiber.

FIG. 6 is a perspective view showing another example of a flat fiber.

DESCRIPTION OF EMBODIMENTS

Embodiments of the present invention will be described hereinafter. The following description is not intended to limit the present invention to particular embodiments. Hereinafter, being "substantially free of" a component means that the content of the component is less than 0.1 mass%, preferably less than 0.05 mass%, more preferably less than 0.01 mass%, even more preferably less than 0.005 mass%, particularly preferably less than 0.003 mass%, and most preferably less than 0.001 mass%. The phrase "consisting essentially of" a component is intended to mean that other components, such as impurities inevitably introduced from, for example, an industrial raw material and a manufacturing apparatus, than the described component may be contained as far as the content of the other components is so small that a composition can be considered "substantially free of" the other components. Preferable ranges of the contents of components, properties, and so on can be determined by arbitrarily combining the upper and lower limits specified below individually.

[Glass composition]

<Composition of glass>

(T-$SnO_2$)

A glass composition of the present embodiment (hereinafter referred to as "glass composition A") includes tin oxide. Sn in the glass is commonly present in the form of $Sn^{2+}$ and/or $Sn^{4+}$. $SnO_2$ is a component that defoams a raw glass. Moreover, $SnO_2$ is a component that improves the water resistance of the glass. Furthermore, Sn in the glass is a component that emits light by ultraviolet irradiation. As for the tin oxide in the glass composition A, the T-$SnO_2$ (which represents total tin oxide calculated as $SnO_2$) content is in the range of 0.1 mass% or more and 2.5 mass% or less. If the T-$SnO_2$ content is less than 0.1 mass%, the refining effect of tin oxide on the glass composition cannot be achieved sufficiently. If the T-$SnO_2$ content is more than 2.5 mass%, the devitrification temperature of the glass composition increases or the glass is likely to undergo phase separation.

The lower limit of the T-$SnO_2$ content is preferably 0.2 mass% or more, or even 0.22 mass% or more, more preferably 0.25 mass% or more, even more preferably 0.3 mass% or more, particularly preferably 0.35 mass% or more, and most preferably 0.4 mass% or more. The T-$SnO_2$ content may be 0.6 mass% or more, even 0.8 mass% or more, or, in some cases, 1.0 mass% or more. The upper limit of the T-$SnO_2$ content is preferably 2 mass% or less, more preferably 1.8 mass% or less, even more preferably 1.6 mass% or less, particularly preferably 1.4 mass% or less, and most preferably less than 1.2 mass%.

(Components other than tin oxide)

The glass composition A further includes $SiO_2$. The $SiO_2$ content in the glass composition A is, for example, 40 mass% or more and 80 mass% or less, and can be 45 mass% or more and 75 mass% or less.

The glass composition A can include $B_2O_3$. The $B_2O_3$ content in the glass composition A can be chosen depending on the application of the glass composition. The $B_2O_3$ content is, for example, 0 mass% or more and 45 mass% or less, and can be 0 mass% or more and 40 mass% or less, or 0.1 mass% or more and 40 mass% or less. The glass composition A can be substantially free of $B_2O_3$. The glass composition A can include $Al_2O_3$. The $Al_2O_3$ content in the glass composition A can be chosen depending on the application of the glass composition. The $Al_2O_3$ content can be 0 mass% or more and 35 mass% or less, 0.1 mass% or more and 30 mass% or less, 0.5 mass% or more and 30 mass% or less, or even 1 mass% or more and 30 mass% or less.

The glass composition A includes an alkaline-earth metal oxide and/or an alkali metal oxide. The alkaline-earth metal oxide (RO) is at least one selected from MgO, CaO, SrO, and BaO, and can be at least one selected from MgO, CaO, and SrO or at least one selected from MgO and CaO. The alkaline-earth metal oxide content in the glass composition A can be chosen depending on the application of a glass fiber or a glass filler formed of the glass composition of the present invention. The RO content is, for example, 0 mass% or more and 45 mass% or less, and can be 0.1 mass% or more and 40 mass% or less. The alkali metal oxide (R'$_2$O) is at least one selected from $Li_2O$, $Na_2O$, and $K_2O$. The alkali metal oxide content in the glass composition A can be chosen depending on the application of the glass composition. A sum (RO + R'$_2$O) of the alkaline-earth metal oxide content and the alkali metal oxide content is 0.1 mass% or more and 45 mass% or less, and can be 0.1 mass% or more and 40 mass% or less, or 0.1 mass% or more and 35 mass% or less.

That is, the glass composition A can further include the following components, in mass%:

$$40 \leq SiO_2 \leq 80;$$

$$0 \leq B_2O_3 \leq 45;$$

$$0 \leq Al_2O_3 \leq 35;$$

and

$$0.1 \leq RO + R'_2O \leq 45.$$

The glass composition A may be composed essentially of the above components, or may be composed of the above components.

(Specific examples of glass composition A)

(Composition A-1)

In a specific example, the glass composition A further includes the following components, in mass%:

$$45 \leq SiO_2 \leq 80;$$

$$10 \leq B_2O_3 \leq 40;$$

$$0.1 \leq Al_2O_3 \leq 20;$$

$$0.1 \leq (MgO + CaO) \leq 10;$$

and

$$0 \leq (Li_2O + Na_2O + K_2O) \leq 5,$$

wherein
MgO/(MgO + CaO), which is a content ratio on a mass basis, is more than 0.5, namely, MgO/(MgO + CaO) > 0.5 (composition A-1).
The glass composition having the glass composition A-1 can exhibit a low permittivity and a low refractive index attributable to the high proportion of the components (network-forming components) that form a glass network. To achieve a low permittivity, the composition A-1 may satisfy, in mass%, $(SiO_2 + B_2O_3) \geq 78$, or even $(SiO_2 + B_2O_3) \geq 80$.
The components in the glass composition A-1 will be described hereinafter.

$(SiO_2)$

Silicon dioxide $(SiO_2)$ is a component that forms the glass network and is a main component (a component whose content is highest) of the composition A-1. Moreover, in the composition A-1, $SiO_2$ is a component that adjusts the devitrification temperature and the viscosity during glass forming, and is a component having a permittivity-lowering effect. When the $SiO_2$ content in the composition A-1 is 45 mass% or more and 80 mass% or less, not only an excessive increase in the devitrification temperature of the glass is reduced, but the melting point of the glass is not excessively high and more uniform melting of raw materials is achieved. The lower limit of the $SiO_2$ content is preferably 48 mass% or more, more preferably 50 mass% or more, and may be 52 mass% or more, 54 mass% or more, or even 55 mass% or more. The upper limit of the $SiO_2$ content is preferably 75 mass% or less, more preferably 70 mass% or less, even more preferably 65 mass% or less, particularly preferably 60 mass% or less, and most preferably 58 mass% or less.

($B_2O_3$)

Diboron trioxide ($B_2O_3$) is a component that forms the glass network. Moreover, $B_2O_3$ is also a component that adjusts the devitrification temperature and the viscosity during glass forming, and is a component having a permittivity-lowering effect. At the same time, $B_2O_3$ is prone to evaporation during melting of the glass composition; an excessively high $B_2O_3$ content makes it difficult for the glass composition to attain sufficient homogeneity. Additionally, excessive inclusion of $B_2O_3$ decreases the water resistance of the glass. When the $B_2O_3$ content in the composition A-1 is 10 mass% or more and 40 mass% or less, not only an excessive increase in the devitrification temperature of the glass is reduced, but the melting point of the glass is not excessively high and more uniform melting of raw materials is achieved. Moreover, in this range, the water resistance of the glass increases. The lower limit of the $B_2O_3$ content is preferably 15 mass% or more, more preferably 20 mass% or more, even more preferably 24 mass% or more, particularly preferably 25 mass% or more, and most preferably more than 26 mass%. The upper limit of the $B_2O_3$ content is preferably 35 mass% or less, more preferably 32 mass% or less, even more preferably 30 mass% or less, and particularly preferably 29 mass% or less, and may be 28 mass% or less.

($Al_2O_3$)

Aluminum oxide ($Al_2O_3$) is a component that forms the glass network. Moreover, $Al_2O_3$ is also a component that adjusts the devitrification temperature and the viscosity during glass forming and is a component that improves the water resistance of the glass. Furthermore, $Al_2O_3$ is a component that adjusts the permittivity of the glass. When the $Al_2O_3$ content in the composition A-1 is 0.1 mass% or more and 20 mass% or less, not only an excessive increase in the devitrification temperature of the glass is reduced, but the water resistance of the glass increases. Moreover, in this case, the melting point of the glass is not excessively high and more uniform melting of raw materials is achieved. The lower limit of the $Al_2O_3$ content is preferably 1 mass% or more, more preferably 5 mass% or more, even more preferably 8 mass% or more, particularly preferably 10 mass% or more, and most preferably 12 mass% or more. The upper limit of the $Al_2O_3$ content is preferably 18 mass% or less, more preferably 16 mass% or less, and even more preferably 15 mass% or less, and may be 14 mass% or less, or even 13 mass% or less.

(MgO, CaO)

Magnesium oxide (MgO) and calcium oxide (CaO) are components that adjust the devitrification temperature and the viscosity during glass forming while maintaining the thermal resistance of the glass. Moreover, MgO and CaO are components that improve the water resistance of the glass. Furthermore, MgO and CaO are components that adjust the permittivity of the glass.
A sum (MgO + CaO) of the MgO content and the CaO content is a key parameter when the permittivity and the water resistance of the glass composition are given priority. MgO and CaO are components that adjust the permittivity and the water resistance of the glass. When the sum (MgO + CaO) of the MgO content and the CaO content in the composition A-1 is 0.1 mass% or more and 10 mass% or less, not only an excessive increase in the devitrification temperature of the glass is reduced, but the melting point of the glass is not excessively high and more uniform melting of raw materials is achieved. Moreover, in this range, the water resistance of the glass increases. The lower limit of the sum (MgO + CaO) of the MgO content and the CaO content is preferably 1 mass% or more, more preferably 1.5 mass% or more, even more preferably 2 mass% or more, particularly preferably 2.5 mass% or more, and most preferably 3 mass% or more. The upper limit of the sum (MgO + CaO) of the MgO content and the CaO content is preferably 8 mass% or less, and may be 7 mass% or less, 6 mass% or less, less than 5 mass%, or even 4.5 mass% or less.
Although addition of MgO and addition of CaO can exert the same effect, addition of MgO is more advantageous than addition of CaO from the viewpoint of further reducing the permittivity. Addition of MgO is more advantageous than addition of CaO also from the viewpoint of further increasing the water resistance. Therefore, MgO and CaO are preferably added to satisfy MgO/(MgO + CaO) > 0.5.
MgO is a component that adjusts the devitrification temperature and the viscosity during glass forming while maintaining the thermal resistance of the glass. Moreover, MgO is a component that improves the water resistance of the glass. Furthermore, MgO is a component that adjusts the permittivity of the glass. Meanwhile, excessive inclusion of MgO increases the permittivity of the glass. Therefore, the lower limit of the MgO content can be 0.1 mass% or more, 0.5 mass% or more, 1 mass% or more, 1.5 mass% or more, 2 mass% or more, or 2.5 mass% or more. The upper limit of the MgO content can be 10 mass% or less, 8 mass% or less, 6 mass% or less, less than 5 mass%, 4.5 mass% or less, 4 mass% or less, or even 3 mass% or less.
CaO is a component that adjusts the devitrification temperature and the viscosity during glass forming while maintaining the thermal resistance of the glass. Moreover, CaO is a component that improves the water resistance of the glass. Furthermore, CaO is a component that adjusts the permittivity of the glass. Meanwhile, excessive inclusion of CaO increases the permittivity of the glass. Therefore, the lower limit of the CaO content can be 0.1 mass% or more, 0.5 mass% or more, 1 mass% or more, 2 mass% or more, 3 mass% or more, or 4 mass% or more. The upper limit of the CaO content can be 10 mass% or less, 8 mass% or less, 6 mass% or less, or even less than 5 mass%. When adjustment of the permittivity of the glass composition is given high priority, the upper limit of the CaO content may be less than 4 mass%, less than 2 mass%, or even less than 1 mass%.

(SrO)

The glass composition A-1 can further include strontium oxide (SrO). SrO is a component that adjusts the devitrification temperature and the viscosity during glass forming. Meanwhile, excessive inclusion of SrO increases the permittivity of the glass. Therefore, the upper limit of the SrO content can be 5 mass% or less, 2 mass% or less, 1 mass% or less, 0.5 mass% or less, or even less than 0.1 mass%. The glass composition may be substantially free of SrO.

(BaO)

The glass composition A-1 can further include barium oxide (BaO). BaO is a component that adjusts the devitrification temperature and the viscosity during glass forming. Meanwhile, excessive inclusion of BaO increases the permittivity of the glass. Therefore, the upper limit of the BaO content can be 5 mass% or less, 2 mass% or less, 1 mass% or less, 0.5 mass% or less, or even less than 0.1 mass%. The glass composition may be substantially free of BaO. When uniform melting of glass raw materials and stable manufacturing of the glass composition are given high priority, the lower limit of the BaO content may be 0.1 mass% or more.

(ZnO)

The glass composition A-1 can further include zinc oxide (ZnO). ZnO is a component that adjusts the devitrification temperature and the viscosity during glass forming. Furthermore, ZnO is a component that adjusts the permittivity of the glass. Meanwhile, excessive inclusion of ZnO increases the permittivity of the glass. Therefore, the upper limit of the ZnO content can be 5 mass% or less, 2 mass% or less, 1 mass% or less, 0.5 mass% or less, or even less than 0.1 mass%. The glass composition may be substantially free of ZnO.

($Li_2O$, $Na_2O$, $K_2O$)

Alkali metal oxides ($Li_2O$, $Na_2O$, $K_2O$) are components that adjust the devitrification temperature and the viscosity during glass forming while maintaining the thermal resistance of the glass.
$Li_2O$ is a component that adjusts the devitrification temperature and the viscosity during glass forming. Meanwhile, excessive inclusion of $Li_2O$ increases the permittivity of the glass. Additionally, excessive inclusion of $Li_2O$ decreases the water resistance of the glass. Therefore, the lower limit of the $Li_2O$ content can be 0.1 mass% or more, 0.2 mass% or more, 0.3 mass% or more, 0.4 mass% or more, or even 0.5 mass% or more. The upper limit of the $Li_2O$ content can be 4 mass% or less, 3 mass% or less, 2 mass% or less, 1.5 mass% or less, or even 1 mass% or less.
$Na_2O$ is a component that adjusts the devitrification temperature and the viscosity during glass forming. Meanwhile, excessive inclusion of $Na_2O$ increases the permittivity of the glass. Additionally, excessive inclusion of $Na_2O$ decreases the water resistance of the glass. Therefore, the upper limit of the $Na_2O$ content can be 4 mass% or less, 2 mass% or less, 1.5 mass% or less, 1 mass% or less, 0.5 mass% or less, or even 0.2 mass% or less.
$K_2O$ is a component that adjusts the devitrification temperature and the viscosity during glass forming. Meanwhile, excessive inclusion of $K_2O$ increases the permittivity of the glass. Additionally, excessive inclusion of $K_2O$ decreases the water resistance of the glass. Therefore, the upper limit of the $K_2O$ content can be 4 mass% or less, 2 mass% or less, 1 mass% or less, 0.5 mass% or less, 0.2 mass% or less, or even less than 0.1 mass%. The glass composition may be substantially free of $K_2O$.
The lower limit of the total alkali metal oxide content ($Li_2O$ + $Na_2O$ + $K_2O$) can be 0.1 mass% or more, 0.2 mass% or more, 0.3 mass% or more, 0.4 mass% or more, or even 0.5 mass% or more. The upper limit of ($Li_2O$ + $Na_2O$ + $K_2O$) can be 5 mass% or less, 4 mass% or less, 3 mass% or less, 2 mass% or less, 1.5 mass% or less, or even 1 mass% or less. The glass composition may be substantially free of the alkali metal oxides ($Li_2O$ + $Na_2O$ + $K_2O$).

($TiO_2$)

The glass composition A-1 can further include titanium oxide ($TiO_2$). $TiO_2$ is a component that improves the meltability and the chemical durability of the glass and that improves the ultraviolet absorption property of the glass. Meanwhile, excessive inclusion of $TiO_2$ increases the permittivity of the glass. The lower limit of the $TiO_2$ content can be 0.1 mass% or more. The upper limit of the $TiO_2$ content can be 5 mass% or less, 2 mass% or less, less than 1 mass%, less than 0.5 mass%, or 0.2 mass% or less. When the $TiO_2$ content is below these upper limits, an excessive increase in devitrification temperature due to the inclusion of $TiO_2$ can be prevented. The upper limit of the $TiO_2$ content may be less than 0.1 mass%. The glass composition may be substantially free of $TiO_2$.

($ZrO_2$)

The glass composition A-1 can further include zirconium oxide ($ZrO_2$). $ZrO_2$ is a component that adjusts the devitrification temperature and the viscosity during glass forming. Meanwhile, excessive inclusion of $ZrO_2$ increases the permittivity of the glass. The upper limit of the $ZrO_2$ content can be 5 mass% or less, 2 mass% or less, less than 1 mass%, less than 0.5 mass%, 0.2 mass% or less, or even less than 0.1 mass%. When the $ZrO_2$ content is below these upper limits, an excessive increase in devitrification temperature due to the inclusion of $ZrO_2$ can be prevented. The glass composition may be substantially free of $ZrO_2$.

($T$-$Fe_2O_3$)

The glass composition A-1 can further include iron oxide. Iron (Fe) included in the glass composition is commonly present in the form of $Fe^{2+}$ or $Fe^{3+}$. $Fe^{3+}$ is a component that enhances the ultraviolet absorption property of the glass composition, and $Fe^{2+}$ is a component that enhances the heat-ray absorption property of the glass composition. Fe can be introduced in some cases not intentionally but inevitably from an industrial raw material. When the amount of Fe is small, coloring of the glass composition can be prevented. The upper limit of the Fe content can be, as expressed by $T$-$Fe_2O_3$ ($T$-$Fe_2O_3$ represents total iron oxide calculated as $Fe_2O_3$), 5 mass% or less, 2 mass% or less, less than 1 mass%, less than 0.5 mass%, or even 0.2 mass% or less. $T$-$Fe_2O_3$ may be 0.1 mass% or more. $T$-$Fe_2O_3$ can reinforce the refining effect of $T$-$SnO_2$ depending on the glass composition.

($CeO_2$)

The glass composition A-1 can further include cerium oxide ($CeO_2$). $CeO_2$ is a component for refining. When the amount of $CeO_2$ is small, coloring of the glass composition can be prevented. Therefore, the lower limit of the $CeO_2$ content can be 0.1 mass% or more. The upper limit of the $CeO_2$ content can be 5 mass% or less, 2 mass% or less, 1 mass% or less, or less than 0.5 mass%. The $CaO$ content can be in a range defined by any combination of these upper and lower limits. The upper limit of the $CeO_2$ content may be less than 0.1 mass%. The glass composition may be substantially free of $CeO_2$.

($F_2$, $Cl_2$)

The glass composition A-1 can further include fluorine and/or chlorine. Fluorine and chlorine may be included in the form of molecules (respectively, $F_2$ and $Cl_2$), or may be included in the form of anions (respectively, $F^-$ and $CF$). Herein, fluorine and chlorine included in the form of molecules or anions may be collectively referred to as $F_2$ and $Cl_2$, respectively. Additionally, the contents of these are expressed as mass percentages of these calculated as molecules. Fluorine ($F_2$) is prone to evaporation and thus can be lost into an atmosphere during melting. As to $F_2$, there is also a problem in that it is difficult to control the amount of $F_2$ in the glass. The upper limit of the $F_2$ content can be 5 mass% or less, 2 mass% or less, 1 mass% or less, 0.5 mass% or less, 0.2 mass% or less, or even less than 0.1 mass%. The glass composition may be substantially free of $F_2$. Chlorine ($Cl_2$) is prone to evaporation and thus can be lost into an atmosphere during melting. As to $Cl_2$, there is also a problem in that it is difficult to control the amount of $Cl_2$ in the glass. The upper limit of the $Cl_2$ content can be 5 mass% or less, 2 mass% or less, 1 mass% or less, 0.5 mass% or less, 0.2 mass% or less, or even less than 0.1 mass%. The glass composition may be substantially free of $Cl_2$.

($P_2O_5$)

The glass composition A-1 can further include phosphorus pentoxide ($P_2O_5$). Phosphorus pentoxide is a component that forms the glass network, and is also a component that adjusts the devitrification temperature and the viscosity during glass forming. Furthermore, $P_2O_5$ is a component that adjusts the permittivity of the glass. In general, when the $P_2O_5$ content is more than 2 mass%, erosion of a furnace wall of a melting furnace or a regenerative furnace during melting of the glass can significantly shorten the life span of the furnace. The upper limit of the $P_2O_5$ content can be 5 mass% or less, 2 mass% or less, less than 1 mass%, less than 0.5 mass%, 0.2 mass% or less, or even less than 0.1 mass%. The glass composition may be substantially free of $P_2O_5$.

(Composition A-2)

In another specific example, the glass composition A further includes the following components, in mass%:

$$50 \le SiO_2 \le 75;$$

$$15 \le Al_2O_3 \le 30;$$

$$5 \le (MgO + CaO) \le 25;$$

and

$$0 \le (Li_2O + Na_2O + K_2O) \le 4 \text{ (composition A-2)}.$$

The glass composition having the glass composition A-2 can be a glass composition having a high mechanical strength and a high elastic modulus.
The components in the glass composition A-2 will be described hereinafter.

($SiO_2$)

$SiO_2$ is a component that forms the glass network, and is a main component (a component whose content is highest) of the composition A-2. Moreover, in the composition A-2, $SiO_2$ is a component that adjusts the devitrification temperature and the viscosity during glass forming and is a component that improves the water resistance. Furthermore, in the composition A-2, $SiO_2$ is also a component that improves the mechanical strength of the glass. When the $SiO_2$ content in the composition A-2 is 50 mass% or more and 75 mass% or less, not only an excessive increase in the devitrification temperature of the glass is reduced, but the water resistance of the glass increases. Moreover, in this range, the melting point of the glass is not excessively high and more uniform melting of raw materials is achieved. Furthermore, in this range, the mechanical strength of the glass increases. The lower limit of the $SiO_2$ content can be 53 mass% or more, 55 mass% or more, 57 mass% or more, 58 mass% or more, or even 59 mass% or more. The upper limit of the $SiO_2$ content can be 70 mass% or less, 67 mass% or less, 65 mass% or less, 63 mass% or less, less than 62 mass%, or even 61 mass% or less.

($B_2O_3$)

$B_2O_3$ is a component that forms the glass network. Moreover, $B_2O_3$ is also a component that adjusts the devitrification temperature and the viscosity during glass forming. Meanwhile, excessive inclusion of $B_2O_3$ decreases the water resistance of the glass. When the $B_2O_3$ content in the composition A-2 is 2 mass% or more and 15 mass% or less, not only an excessive increase in the devitrification temperature of the glass is reduced, but the water resistance of the glass increases. Moreover, in this case, the melting point of the glass is not excessively high and more uniform melting of raw materials is achieved. The lower limit of the $B_2O_3$ content can be 0.1 mass% or more. The upper limit of the $B_2O_3$ content can be 5 mass% or less, 2 mass% or less, 1.5 mass% or less, 1 mass% or less, 0.5 mass% or less, or even 0.1 mass% or less.

($Al_2O_3$)

$Al_2O_3$ is a component that forms the glass network. Moreover, $Al_2O_3$ is also a component that adjusts the devitrification temperature and the viscosity during glass forming and is a component that improves the water resistance of the glass. Furthermore, in the composition A-2, $Al_2O_3$ is also a component that improves the elastic modulus of the glass. When the $Al_2O_3$ content in the composition A-2 is 15 mass% or more and 30 mass% or less, not only an excessive increase in the devitrification temperature of the glass is reduced, but the water resistance of the glass increases. Moreover, in this case, the melting point of the glass is not excessively high and more uniform melting of raw materials is achieved. Furthermore, in this case, the elastic modulus of the glass increases. The lower limit of the $Al_2O_3$ content

can be 16 mass% or more, 17 mass%, or even 18 mass% or more. The upper limit of the $Al_2O_3$ content can be 25 mass% or less, 23 mass% or less, 21 mass% or less, or even less than 20 mass%.

(MgO, CaO)

In the composition A-2, MgO and CaO are components that adjust the devitrification temperature and the viscosity during glass forming. Furthermore, in the composition A-2, MgO and CaO are also components that improve the elastic modulus of the glass.

When the sum (MgO + CaO) of the MgO content and the CaO content in the composition A-2 is 5 mass% or more and 25 mass% or less, the devitrification temperature of the glass and the viscosity thereof during melting can be controlled within ranges suitable for manufacturing of a glass filler, a glass fiber, etc. Furthermore, in this case, the elastic modulus of the glass increases. The lower limit of (MgO + CaO) can be 8 mass% or more, and may be 10 mass% or more, 11 mass% or more, or more than 12 mass%. The upper limit of (MgO + CaO) can be 22 mass% or less, 21 mass% or less, 20 mass% or less, 19 mass% or less, or 18 mass% or less.

The lower limit of the MgO content in the composition A-2 can be 0.1 mass% or more, and may be 2 mass% or more, 4 mass% or more, 6 mass% or more, 8 mass% or more, 10 mass% or more, or even more than 12 mass%. The upper limit of the MgO content can be 22 mass% or less, 20 mass% or less, 18 mass% or less, 17 mass% or less, or even 16 mass% or less.

The lower limit of the CaO content in the composition A-2 can be 0.1 mass% or more. The upper limit of the CaO content can be 20 mass% or less, 15 mass% or less, 12 mass% or less, 10 mass% or less, or 8 mass% or less.

(SrO) (BaO) (ZnO)

The composition A-2 can further include SrO, BaO, and ZnO, provided that the content of each is as described for the composition A-1. However, the upper limit of each of the SrO content, the BaO content, and the ZnO content may be 10 mass% or less.

($Li_2O$, $Na_2O$, $K_2O$)

In the composition A-2, the alkali metal oxides ($Li_2O$, $Na_2O$, and $K_2O$) are components that adjust the devitrification temperature and the viscosity during glass forming. The composition A-2 can include $Li_2O$, $Na_2O$, and $K_2O$, provided that the content of each is as described for the composition A-1. However, in the composition A-2, the upper limit of $Li_2O + Na_2O + K_2O$ is limited to 4 mass% or less.

($TiO_2$) ($ZrO_2$) ($T-Fe_2O_3$) ($CeO_2$) ($F_2$, $Cl_2$) ($P_2O_5$)

The composition A-2 can further include $TiO_2$, $ZrO_2$, $T-Fe_2O_3$, $CeO_2$, $F_2$, $Cl_2$, and $P_2O_5$, provided that the content of each is as described for the composition A-1.

(Composition A-3)

In another specific example, the glass composition A further includes the following components, in mass%:

$$60 \le SiO_2 \le 75;$$

$$2 \le B_2O_3 \le 8;$$

$$2 \le Al_2O_3 \le 8;$$

$$5 < B_2O_3 + Al_2O_3 \le 15;$$

$$3 \le CaO \le 20;$$

$$6 \leq Na_2O \leq 20;$$

and

$$9 \leq (Li_2O + Na_2O + K_2O) \leq 20 \text{ (composition A-3)}.$$

The glass composition A-3 corresponds to a C-glass composition. The glass composition A-3 exhibits a high chemical durability attributable to the high proportion of the components (network-forming components) that form the glass network and has excellent mechanical properties, like a C-glass composition.
The components in the glass composition A-3 will be described hereinafter.

$(SiO_2)$

$SiO_2$ is a component that forms the glass network, and is a main component (a component whose content is highest) of the composition A-3. Moreover, in the composition A-3, $SiO_2$ is a component that adjusts the devitrification temperature and the viscosity during glass forming and is a component that improves the acid resistance. When the $SiO_2$ content in the composition A-3 is 60 mass% or more and 75 mass% or less, not only an excessive increase in the devitrification temperature of the glass is reduced, but the acid resistance of the glass increases. Moreover, in this range, the melting point of the glass is not excessively high and more uniform melting of raw materials is achieved. The lower limit of the $SiO_2$ content can be 63 mass% or more, more than 64 mass%, or even more than 65 mass%. The upper limit of the $SiO_2$ content can be 72 mass% or less, or 70 mass% or less.

$(B_2O_3)$

$B_2O_3$ is a component that forms the glass network. Moreover, $B_2O_3$ is also a component that adjusts the devitrification temperature and the viscosity during glass forming. Meanwhile, excessive inclusion of $B_2O_3$ decreases the acid resistance of the glass. When the $B_2O_3$ content in the composition A-3 is 2 mass% or more and 8 mass% or less, not only an excessive increase in the devitrification temperature of the glass is reduced, but the acid resistance of the glass increases. Moreover, in this case, the melting point of the glass is not excessively high and more uniform melting of raw materials is achieved. The lower limit of the $B_2O_3$ content can be 3 mass% or more, or 4 mass% or more. The upper limit of the $B_2O_3$ content can be 7 mass% or less, 6 mass% or less, or even 5 mass% or less.

$(Al_2O_3)$

$Al_2O_3$ is a component that forms the glass network. Moreover, $Al_2O_3$ is also a component that adjusts the devitrification temperature and the viscosity during glass forming and is a component that improves the water resistance of the glass. Meanwhile, excessive inclusion of $Al_2O_3$ decreases the acid resistance of the glass. When the $Al_2O_3$ content in the composition A-3 is 2 mass% or more and 8 mass% or less, not only an excessive increase in the devitrification temperature of the glass is reduced, but the acid resistance of the glass increases. Moreover, in this case, the melting point of the glass is not excessively high and more uniform melting of raw materials is achieved. The lower limit of the $Al_2O_3$ content can be 3 mass% or more, 3.5 mass% or more, or even 4 mass% or more. The upper limit of the $Al_2O_3$ content can be 7 mass% or less, 6 mass% or less, or even 5 mass% or less.

$(B_2O_3 + Al_2O_3)$

For the composition A-3, when the ease of formation and the acid resistance of the glass composition are given priority, a sum $(B_2O_3 + Al_2O_3)$ of the $B_2O_3$ content and the $Al_2O_3$ content is a key parameter. When $(B_2O_3 + Al_2O_3)$ in the composition A-3 is more than 5 mass% and 15 mass% or less, not only an excessive increase in the devitrification temperature of the glass is reduced, but the acid resistance of the glass increases. Moreover, in this case, the melting point of the glass is not excessively high and more uniform melting of raw materials is achieved. The lower limit of $(B_2O_3 + Al_2O_3)$ can be 6 mass% or more, 7 mass% or more, or even 8 mass% or more. The upper limit of $(B_2O_3 + Al_2O_3)$ can be 14 mass% or less, 13 mass% or less, less than 12 mass%, 11 mass% or less, or even 10 mass% or less.

$(MgO)$

In the composition A-3, MgO is a component that adjusts the devitrification temperature and the viscosity during glass forming. The lower limit of the MgO content in the composition A-3 can be 0.1 mass% or more, 1 mass% or more, or even 2 mass% or more. The upper limit of the MgO content can be 10 mass% or less, 8 mass% or less, 6 mass% or less, 5 mass% or less, or even 4 mass% or less.

(CaO)

CaO is a component that adjusts the devitrification temperature and the viscosity during glass forming. When the CaO content in the composition A-3 is 3 mass% or more and 20 mass% or less, the devitrification temperature of the glass and the viscosity thereof during melting can be controlled within ranges suitable for manufacturing of a glass filler, a glass fiber, etc. The lower limit of the CaO content can be 4 mass% or more. The upper limit of the CaO content can be 15 mass% or less, 11 mass% or less, or even 9 mass% or less.

(SrO) (BaO) (ZnO)

The composition A-3 can further include SrO, BaO, and ZnO, provided that the content of each is as described for the composition A-1. However, the upper limit of each of the SrO content, the BaO content, and the ZnO content may be 10 mass% or less.

($Li_2O$, $Na_2O$, $K_2O$)

In the composition A-3, the alkali metal oxides ($Li_2O$, $Na_2O$, $K_2O$) are components that adjust the devitrification temperature and the viscosity during glass forming while maintaining the thermal resistance of the glass.
The lower limit of the $Li_2O$ content in the composition A-3 can be 0.1 mass% or more, or even 0.5 mass% or more. The upper limit of the $Li_2O$ content can be 5 mass% or less, less than 2 mass%, or even less than 1 mass%.
When the $Na_2O$ content in the composition A-3 is 6 mass% or more and 20 mass% or less, the devitrification temperature of the glass and the viscosity thereof can be controlled within ranges suitable for manufacturing of a glass filler, a glass fiber, etc. Additionally, an increase in the melting point of the glass can be reduced to achieve more uniform melting of glass raw materials, and at the same time a high thermal resistance of the glass can be secured without an excessive decrease in glass transition temperature. Furthermore, in this range, the chemical durability of the glass can also be improved. The lower limit of the $Na_2O$ content can be 7 mass% or more, 8 mass% or more, 9 mass% or more, 9.5 mass% or more, or even 10 mass% or more. The upper limit of the $Na_2O$ content can be 17 mass% or less, 15 mass% or less, 13 mass% or less, or even 12 mass% or less.
The lower limit of the $K_2O$ content in the composition A-3 can be 0.1 mass% or more, or 0.5 mass% or more. The upper limit of the $K_2O$ content in the composition A-3 can be 5 mass% or less, 3 mass% or less, less than 2 mass%, or even 1 mass% or less.
When the total alkali metal oxide content ($Li_2O + Na_2O + K_2O$) in the composition A-3 is 9 mass% or more and 20 mass% or less, the devitrification temperature of the molten glass and the viscosity thereof can be controlled within ranges suitable for manufacturing of a glass filler, a glass fiber, etc. Additionally, an increase in the melting point of the glass can be reduced to achieve more uniform melting of glass raw materials, and at the same time a high thermal resistance of the glass can be secured without an excessive decrease in glass transition temperature. The lower limit of ($Li_2O + Na_2O + K_2O$) can be 9.5 mass% or more, 10 mass% or more, 10.5 mass% or more, or 11 mass% or more. The upper limit of ($Li_2O + Na_2O + K_2O$) can be 18 mass% or less, 16 mass% or less, 15 mass% or less, 14 mass% or less, 13 mass% or less, or even 12 mass% or less.

($TiO_2$) ($ZrO_2$) ($T\text{-}Fe_2O_3$) ($CeO_2$) ($F_2$, $Cl_2$) ($P_2O_5$)

The composition A-3 can further include $TiO_2$, $ZrO_2$, $T\text{-}Fe_2O_3$, $CeO_2$, $F_2$, $Cl_2$, and $P_2O_5$, provided that the content of each is as described for the composition A-1.

(Composition A-4)

In another specific example, the glass composition A further includes the following components, in mass%:

$$50 \leq SiO_2 \leq 60;$$

$$2 \leq B_2O_3 \leq 15;$$

$$10 \leq Al_2O_3 \leq 20;$$

$$15 \leq CaO \leq 30;$$

and

$$0 \leq (Li_2O + Na_2O + K_2O) \leq 2 \text{ (composition A-4)}.$$

The glass composition A-4 corresponds to an E-glass composition. Additionally, a glass fiber and a glass filler having the glass composition A-4 exhibit a high electrical insulation property and a high chemical durability attributable to the low alkali metal oxide content and have excellent mechanical properties, like an E-glass composition.

The components in the glass composition A-4 will be described hereinafter.

$(SiO_2)$

$SiO_2$ is a component that forms the glass network, and is a main component (a component whose content is highest) of the composition A-4. Moreover, in the composition A-4, $SiO_2$ is a component that adjusts the devitrification temperature and the viscosity during glass forming and is a component that improves the water resistance. When the $SiO_2$ content in the composition A-4 is 50 mass% or more and 60 mass% or less, not only an excessive increase in the devitrification temperature of the glass is reduced, but the water resistance of the glass increases. Moreover, in this range, the melting point of the glass is not excessively high and more uniform melting of raw materials is achieved. The lower limit of the $SiO_2$ content can be 51 mass% or more, 52 mass% or more, 53 mass% or more, or even 54 mass% or more. The upper limit of the $SiO_2$ content can be 58 mass% or less, 57 mass% or less, or even 56 mass% or less.

$(B_2O_3)$

$B_2O_3$ is a component that forms the glass network. Moreover, $B_2O_3$ is also a component that adjusts the devitrification temperature and the viscosity during glass forming. Meanwhile, excessive inclusion of $B_2O_3$ decreases the water resistance of the glass. When the $B_2O_3$ content in the composition A-4 is 2 mass% or more and 15 mass% or less, not only an excessive increase in the devitrification temperature of the glass is reduced, but the water resistance of the glass increases. Moreover, in this case, the melting point of the glass is not excessively high and more uniform melting of raw materials is achieved. The lower limit of the $B_2O_3$ content can be 3 mass% or more, 4 mass%, or even 5 mass% or more. The upper limit of the $B_2O_3$ content can be 13 mass% or less, 10 mass% or less, 8 mass% or less, 7 mass% or less, or even 6 mass% or less.

$(Al_2O_3)$

$Al_2O_3$ is a component that forms the glass network. Moreover, $Al_2O_3$ is also a component that adjusts the devitrification temperature and the viscosity during glass forming and is a component that improves the water resistance of the glass. When the $Al_2O_3$ content in the composition A-4 is 10 mass% or more and 20 mass% or less, not only an excessive increase in the devitrification temperature of the glass is reduced, but the water resistance of the glass increases. Moreover, in this case, the melting point of the glass is not excessively high and more uniform melting of raw materials is achieved. The lower limit of the $Al_2O_3$ content can be 11 mass% or more, 12 mass% or more, 13 mass% or more, or even 14 mass% or more. The upper limit of the $Al_2O_3$ content can be 18 mass% or less, 17 mass% or less, 16 mass% or less, or even 15 mass% or less.

$(MgO)$

In the composition A-4, MgO is a component that adjusts the devitrification temperature and the viscosity during glass forming. The lower limit of the MgO content in the composition A-4 can be 0.1 mass% or more. The upper limit of the MgO content can be 10 mass% or less, 8 mass% or less, 6 mass% or less, 5 mass% or less, or even 4 mass% or less.

$(CaO)$

CaO is a component that adjusts the devitrification temperature and the viscosity during glass forming. When the CaO content in the composition A-4 is 15 mass% or more and 30 mass% or less, the devitrification temperature of the glass and the viscosity thereof during melting can be controlled within ranges suitable for manufacturing of a glass filler, a glass fiber, etc. The lower limit of the CaO content can be 16 mass% or more, 17 mass% or more, 18 mass% or more, or even 19 mass% or more. The upper limit of the CaO content can be 28 mass% or less, 26 mass% or less, or even 25 mass% or less.

(SrO) (BaO) (ZnO)

The composition A-4 can further include SrO, BaO, and ZnO, provided that the content of each is as described for the composition A-1. However, the upper limit of each of the SrO content, the BaO content, and the ZnO content may be 10 mass% or less.

($Li_2O$, $Na_2O$, $K_2O$)

In the composition A-4, the alkali metal oxides ($Li_2O$, $Na_2O$, $K_2O$) are components that adjust the devitrification temperature and the viscosity during glass forming.
When the total alkali metal oxide content ($Li_2O$ + $Na_2O$ + $K_2O$) in the composition A-4 is 0 mass% or more and 2 mass% or less, the devitrification temperature of the molten glass and the viscosity thereof can be controlled within ranges suitable for manufacturing of a glass filler, a glass fiber, etc. Additionally, an increase in the melting point of the glass can be reduced to achieve more uniform melting of glass raw materials, and at the same time a high thermal resistance of the glass can be secured without an excessive decrease in glass transition temperature. The lower limit of ($Li_2O$ + $Na_2O$ + $K_2O$) may be more than 0 mass%, or can be 0.1 mass% or more. The upper limit of ($Li_2O$ + $Na_2O$ + $K_2O$) can be 1.5 mass% or less, 1 mass% or less, or even 0.8 mass% or less.

($TiO_2$) ($ZrO_2$) ($T\text{-}Fe_2O_3$) ($CeO_2$) ($F_2$, $Cl_2$) ($P_2O_5$)

The composition A-4 can further include $TiO_2$, $ZrO_2$, $T\text{-}Fe_2O_3$, $CeO_2$, $F_2$, $Cl_2$, and $P_2O_5$, provided that the content of each is as described for the composition A-1.

(Composition A-5)

In another specific example, the glass composition A further includes the following components, in mass%:

$$57 \leq SiO_2 \leq 65;$$

$$8 \leq Al_2O_3 \leq 15;$$

$$1 \leq MgO \leq 5;$$

$$15 \leq CaO \leq 30;$$

and

$$0 \leq (Li_2O + Na_2O + K_2O) \leq 4 \text{ (composition A-5)}.$$

Additionally, a glass fiber and a glass filler having the glass composition A-5 have such an excellent thermal resistance that deformation by overheating at high temperatures is reduced, and are excellent in chemical durability, particularly acid resistance.
The components in the glass composition A-5 will be described hereinafter.

($SiO_2$)

$SiO_2$ is a component that forms the glass network, and is a main component (a component whose content is highest) of the composition A-5. Moreover, in the composition A-5, $SiO_2$ is a component that adjusts the devitrification temperature and the viscosity during glass forming and is a component that improves the acid resistance. When the $SiO_2$ content in the composition A-5 is 57 mass% or more and 65 mass% or less, not only an excessive increase in the devitrification temperature of the glass is reduced, but the acid resistance of the glass increases. Moreover, in this range, the melting point of the glass is not excessively high and more uniform melting of raw materials is achieved. The lower limit of the $SiO_2$ content can be 59 mass% or more, and may be more than 60 mass%. The upper limit of the $SiO_2$ content can be 64 mass% or less, or 63 mass% or less.

($B_2O_3$)

The composition A-5 can further include $B_2O_3$. $B_2O_3$ is a component that forms the glass network. Moreover, in the composition A-5, $B_2O_3$ is also a component that adjusts the devitrification temperature and the viscosity during glass forming. The upper limit of the $B_2O_3$ content in the composition A-5 can be 2 mass% or less, 1.5 mass% or less, 1 mass% or less, 0.5 mass% or less, or even less than 0.1 mass%. The composition A-5 may be substantially free of $B_2O_3$.

($Al_2O_3$)

$Al_2O_3$ is a component that forms the glass network. Moreover, $Al_2O_3$ is also a component that adjusts the devitrification temperature and the viscosity during glass forming and is a component that improves the water resistance of the glass. Meanwhile, excessive inclusion of $Al_2O_3$ decreases the acid resistance of the glass. When the $Al_2O_3$ content in the composition A-5 is 8 mass% or more and 15 mass% or less, not only an excessive increase in the devitrification temperature of the glass is reduced, but the acid resistance of the glass increases. Moreover, in this case, the melting point of the glass is not excessively high and more uniform melting of raw materials is achieved. The lower limit of the $Al_2O_3$ content can be 9 mass% or more, or 10 mass% or more. The upper limit of the $Al_2O_3$ content can be 13 mass% or less, or less than 12 mass%.

($SiO_2$ - $Al_2O_3$)

In the composition A-5, the balance between the $SiO_2$ content and the $Al_2O_3$ content is important in terms of the acid resistance of the glass. From the viewpoint of improving the acid resistance of the glass, the lower limit of a value ($SiO_2$ - $Al_2O_3$) determined by subtracting the $Al_2O_3$ content from the $SiO_2$ content is preferably 47 mass% or more, or preferably more than 49 mass%. Additionally, the upper limit of ($SiO_2$ - $Al_2O_3$) is preferably 57 mass% or less, and is more preferably 56 mass% or less, 55 mass% or less, 54 mass% or less, 53 mass% or less, or 52 mass% or less, in order of preference.

(MgO, CaO)

In the composition A-5, MgO and CaO are components that adjust the devitrification temperature and the viscosity during glass forming. When the MgO content in the composition A-5 is 1 mass% or more and 5 mass% or less, the devitrification temperature and the viscosity during melting can be controlled within ranges suitable for manufacturing of a glass filler, a glass fiber, etc. The lower limit of the MgO content can be 1.5 mass% or more, or 2 mass% or more. The upper limit of the MgO content can be 4.5 mass% or less, or 4 mass% or less.

When the CaO content in the composition A-5 is 15 mass% or more and 30 mass% or less, the devitrification temperature and the viscosity during melting can be controlled within ranges suitable for manufacturing of a glass filler, a glass fiber, etc. The lower limit of the CaO content can be 18 mass% or more, 19 mass% or more, or even 20 mass% or more. The upper limit of the CaO content can be 27 mass% or less, 25 mass% or less, or even 24 mass% or less.

(SrO) (BaO) (ZnO)

The composition A-5 can further include SrO, BaO, and ZnO, provided that the content of each is as described for the composition A-1. However, the upper limit of each of the SrO content, the BaO content, and the ZnO content may be 10 mass% or less.

($Li_2O$, $Na_2O$, $K_2O$)

In the composition A-5, the alkali metal oxides ($Li_2O$, $Na_2O$, $K_2O$) are components that adjust the devitrification temperature and the viscosity during glass forming.

When the total alkali metal oxide content ($Li_2O$ + $Na_2O$ + $K_2O$) in the composition A-5 is 0 mass% or more and 4 mass% or less, the devitrification temperature of the molten glass and the viscosity thereof can be controlled within ranges suitable for manufacturing of a glass filler, a glass fiber, etc. Additionally, an increase in the melting point of the glass can be reduced to achieve more uniform melting of glass raw materials, and at the same time a high thermal resistance of the glass can be secured without an excessive decrease in glass transition temperature. The lower limit of ($Li_2O$ + $Na_2O$ + $K_2O$) may be more than 0 mass%, and can be 0.1 mass% or more. The upper limit of ($Li_2O$ + $Na_2O$ + $K_2O$) can be 3 mass% or less, or less than 2 mass%. When uniform melting of glass raw materials and ease of manufacturing of the glass composition are given high priority in the composition A-5, ($Li_2O$ + $Na_2O$ + $K_2O$) may be 2 mass% or more and 4 mass% or less. When the alkali resistance of the glass composition is given high priority in the composition A-5, ($Li_2O$ + $Na_2O$ + $K_2O$) may be less than 0.1 mass%.

In the composition A-5, among the alkali metal oxides, lithium oxide ($Li_2O$) makes a particularly large contribution to the above-described effects attributed to the alkali metal oxides. From this point of view, the lower limit of the $Li_2O$ content in the composition A-5 can be 0.1 mass% or more, or 0.4 mass% or more. The upper limit of the $Li_2O$ content can be 3 mass% or less, less than 2 mass%, or even 1 mass% or less. When uniform melting of glass raw materials and ease of manufacturing of the glass composition are given high priority, the $Li_2O$ content in the composition A-5 may be 2 mass% or more and 4 mass% or less.

($TiO_2$) ($ZrO_2$) ($T$-$Fe_2O_3$) ($CeO_2$) ($F_2$, $Cl_2$) ($P_2O_5$)

The composition A-5 can further include $TiO_2$, $ZrO_2$, $T$-$Fe_2O_3$, $CeO_2$, $F_2$, $Cl_2$, and $P_2O_5$, provided that the content of each is as described for the composition A-1.

(Composition A-6)

In another specific example, the glass composition A further includes the following components, in mass%:

$$65 < SiO_2 \leq 70;$$

$$5 \leq Al_2O_3 \leq 15;$$

$$1 \leq MgO \leq 10;$$

$$10 \leq CaO \leq 25;$$

and

$$0 \leq (Li_2O + Na_2O + K_2O) \leq 4 \text{ (composition A-6).}$$

Additionally, a glass fiber and a glass filler having the glass composition A-6 have such an excellent thermal resistance that deformation by overheating at high temperatures is reduced, and are excellent in chemical durability, particularly acid resistance.
The components in the glass composition A-6 will be described hereinafter.

($SiO_2$)

$SiO_2$ is a component that forms the glass network, and is a main component (a component whose content is highest) of the composition A-6. Moreover, in the composition A-6, $SiO_2$ is a component that adjusts the devitrification temperature and the viscosity during glass forming and is a component that improves the acid resistance. When the $SiO_2$ content in the composition A-6 is more than 65 mass% and 70 mass% or less, not only an excessive increase in the devitrification temperature of the glass is reduced, but the acid resistance of the glass increases. Moreover, in this range, the melting point of the glass is not excessively high and more uniform melting of raw materials is achieved. The lower limit of the $SiO_2$ content can be 66 mass% or more. The upper limit of the $SiO_2$ content can be 69 mass% or less, 68 mass% or less, or even 67 mass% or less.

(B$_2$O$_3$)

The composition A-6 can further include B$_2$O$_3$. B$_2$O$_3$ is a component that forms the glass network. Moreover, in the composition A-6, B$_2$O$_3$ is also a component that adjusts the devitrification temperature and the viscosity during glass forming. The upper limit of the B$_2$O$_3$ content in the composition A-6 can be 2 mass% or less, 1.5 mass% or less, 1 mass% or less, 0.5 mass% or less, or even less than 0.1 mass%. The composition A-6 may be substantially free of B$_2$O$_3$.

(Al$_2$O$_3$)

Al$_2$O$_3$ is a component that forms the glass network. Moreover, Al$_2$O$_3$ is also a component that adjusts the devitrification temperature and the viscosity during glass forming and is a component that improves the water resistance of the glass. Meanwhile, excessive inclusion of Al$_2$O$_3$ decreases the acid resistance of the glass. When the Al$_2$O$_3$ content in the composition A-6 is 5 mass% or more and 15 mass% or less, not only an increase in devitrification temperature is reduced, but the acid resistance of the glass increases. Moreover, in this case, the melting point of the glass is not excessively high and more uniform melting of raw materials is achieved. The lower limit of the Al$_2$O$_3$ content can be 6 mass% or more, 8 mass% or more, or even 10 mass% or more. The upper limit of the Al$_2$O$_3$ content can be 13 mass% or less, or less than 12 mass%.

(SiO$_2$ - Al$_2$O$_3$)

In the composition A-6, the balance between the SiO$_2$ content and the Al$_2$O$_3$ content is important in terms of the acid resistance of the glass. From the viewpoint of improving the acid resistance of the glass, the lower limit of the value (SiO$_2$ - Al$_2$O$_3$) determined by subtracting the Al$_2$O$_3$ content from the SiO$_2$ content is preferably more than 50 mass%, more preferably 51 mass% or more, even more preferably 52 mass% or more, and most preferably more than 53 mass%. Additionally, the upper limit of (SiO$_2$ - Al$_2$O$_3$) is preferably 60 mass% or less, and is more preferably 59 mass% or less, 58 mass% or less, or 57 mass% or less, in order of preference.

(MgO, CaO)

In the composition A-6, MgO and CaO are components that adjust the devitrification temperature and the viscosity during glass forming. When the MgO content in the composition A-6 is 1 mass% or more and 10 mass% or less, the devitrification temperature of the glass and the viscosity thereof during melting can be controlled within ranges suitable for manufacturing of a glass filler, a glass fiber, etc. The lower limit of the MgO content can be 2 mass% or more. The upper limit of the MgO content can be 8 mass% or less, 5 mass% or less, or even 4 mass% or less.

When the CaO content in the composition A-6 is 10 mass% or more and 25 mass% or less, the devitrification temperature of the glass and the viscosity thereof during melting can be controlled within ranges suitable for manufacturing of a glass filler, a glass fiber, etc. The lower limit of the CaO content can be 12 mass% or more, 14 mass% or more, or even more than 15 mass%. The upper limit of the CaO content can be 23 mass% or less, 21 mass% or less, or even 20 mass% or less.

(SrO) (BaO) (ZnO)

The composition A-6 can further include SrO, BaO, and ZnO, provided that the content of each is as described for the composition A-1. However, the upper limit of each of the SrO content, the BaO content, and the ZnO content may be 10 mass% or less.

(Li$_2$O, Na$_2$O, K$_2$O)

In the composition A-6, the alkali metal oxides (Li$_2$O, Na$_2$O, K$_2$O) are components that adjust the devitrification temperature and the viscosity during glass forming.

When the total alkali metal oxide content (Li$_2$O + Na$_2$O + K$_2$O) in the composition A-6 is 0 mass% or more and 4 mass% or less, the devitrification temperature of the glass and the viscosity thereof can be controlled within ranges suitable for manufacturing of a glass filler, a glass fiber, etc. Additionally, an increase in the melting point of the glass can be reduced to achieve more uniform melting of glass raw materials, and at the same time a high thermal resistance of the glass can be secured without an excessive decrease in glass transition temperature. The lower limit of (Li$_2$O + Na$_2$O + K$_2$O) can be 0.1 mass% or more, 1 mass% or more, 1.5 mass% or more, or even 2 mass% or more. The upper limit of (Li$_2$O + Na$_2$O + K$_2$O) can be 3.5 mass% or less, or less than 3 mass%.

In the composition A-6, among the alkali metal oxides, lithium oxide (Li$_2$O) makes a particularly large contribution to the above-described effects attributed to the alkali metal oxides. From this point of view, the lower limit of the $Li_2O$ content in the composition A-6 can be 0.1 mass% or more, 0.5 mass% or more, or even 1 mass% or more. The upper limit of the $Li_2O$ content can be 3 mass% or less, less than 2 mass%, or 1 mass% or less.

$(TiO_2)$ $(ZrO_2)$ $(T\text{-}Fe_2O_3)$ $(CeO_2)$ $(F_2, Cl_2)$ $(P_2O_5)$

The composition A-6 can further include $TiO_2$, $ZrO_2$, $T\text{-}Fe_2O_3$, $CeO_2$, $F_2$, $Cl_2$, and $P_2O_5$, provided that the content of each is as described for the composition A-1.

(Composition A-7)

In another specific example, the glass composition A further includes the following components, in mass%:

$$60 \leq SiO_2 \leq 70;$$

$$5 \leq Al_2O_3 \leq 15;$$

$$1 \leq MgO \leq 10;$$

$$10 \leq CaO \leq 25;$$

and

$$4 < (Li_2O + Na_2O + K_2O) < 9 \text{ (composition A-7)}.$$

Additionally, a glass fiber and a glass filler having the glass composition A-7 have such an excellent thermal resistance that deformation by overheating at high temperatures is reduced, and are excellent in chemical durability, particularly acid resistance.
The components in the glass composition A-7 will be described hereinafter.

$(SiO_2)$

$SiO_2$ is a component that forms the glass network, and is a main component (a component whose content is highest) of the composition A-7. Moreover, in the composition A-7, $SiO_2$ is a component that adjusts the devitrification temperature and the viscosity during glass forming and is a component that improves the acid resistance. When the $SiO_2$ content in the composition A-7 is 60 mass% or more and 70 mass% or less, not only an increase in devitrification temperature is reduced, but the acid resistance of the glass increases. Moreover, in this range, the melting point of the glass is not excessively high and more uniform melting of raw materials is achieved. The lower limit of the $SiO_2$ content can be 63 mass% or more, 64 mass% or more, or even more than 65 mass%. The upper limit of the $SiO_2$ content can be 69 mass% or less, 68 mass% or less, or even 67 mass% or less.

$(B_2O_3)$

The composition A-7 can further include $B_2O_3$. $B_2O_3$ is a component that forms the glass network. Moreover, in the composition A-7, $B_2O_3$ is also a component that adjusts the devitrification temperature and the viscosity during glass forming. The upper limit of the $B_2O_3$ content in the composition A-7 can be 2 mass% or less, 1.5 mass% or less, 1 mass% or less, 0.5 mass% or less, or even less than 0.1 mass%. The composition A-7 may be substantially free of $B_2O_3$.

$(Al_2O_3)$

$Al_2O_3$ is a component that forms the glass network. Moreover, $Al_2O_3$ is also a component that adjusts the devitrification temperature and the viscosity during glass forming and is a component that improves the water resistance of the glass. Meanwhile, excessive inclusion of $Al_2O_3$ decreases the acid resistance of the glass. When the $Al_2O_3$ content

in the composition A-7 is 5 mass% or more and 15 mass% or less, not only an increase in devitrification temperature is reduced, but the acid resistance of the glass increases. Moreover, in this case, the melting point of the glass is not excessively high and more uniform melting of raw materials is achieved. The lower limit of the $Al_2O_3$ content can be 6 mass% or more, 8 mass% or more, 9 mass% or more, or even 10 mass% or more. The upper limit of the $Al_2O_3$ content can be 13 mass% or less, or less than 12 mass%.

($SiO_2$ - $Al_2O_3$)

In the composition A-7, the balance between the $SiO_2$ content and the $Al_2O_3$ content is important in terms of the acid resistance of the glass. From the viewpoint of improving the acid resistance of the glass, the lower limit of the value ($SiO_2$ - $Al_2O_3$) determined by subtracting the $Al_2O_3$ content from the $SiO_2$ content is preferably more than 50 mass%, more preferably 51 mass% or more, even more preferably 52 mass% or more, and most preferably more than 53 mass%. Additionally, the upper limit of ($SiO_2$ - $Al_2O_3$) is preferably 60 mass% or less, and is more preferably 59 mass% or less, 58 mass% or less, or 57 mass% or less, in order of preference.

(MgO, CaO)

In the composition A-7, MgO and CaO are components that adjust the devitrification temperature and the viscosity during glass forming. When the MgO content in the composition A-7 is 1 mass% or more and 10 mass% or less, the devitrification temperature of the glass and the viscosity thereof during melting can be controlled within ranges suitable for manufacturing of a glass filler, a glass fiber, etc. The lower limit of the MgO content can be 2 mass% or more. The upper limit of the MgO content can be 8 mass% or less, 5 mass% or less, or even 4 mass% or less. When the CaO content in the composition A-7 is 10 mass% or more and 25 mass% or less, the devitrification temperature of the glass and the viscosity thereof during melting can be controlled within ranges suitable for manufacturing of a glass filler, a glass fiber, etc. The lower limit of the CaO content can be 12 mass% or more, 13 mass% or more, 14 mass% or more, or even more than 15 mass%. The upper limit of the CaO content can be 23 mass% or less, 21 mass% or less, 20 mass% or less, 19 mass% or less, or even 18 mass% or less.

(SrO) (BaO) (ZnO)

The composition A-7 can further include SrO, BaO, and ZnO, provided that the content of each is as described for the composition A-1. However, the upper limit of each of the SrO content, the BaO content, and the ZnO content may be 10 mass% or less.

($Li_2O$, $Na_2O$, $K_2O$)

In the composition A-7, the alkali metal oxides ($Li_2O$, $Na_2O$, $K_2O$) are components that adjust the devitrification temperature and the viscosity during glass forming.
When the total alkali metal oxide content ($Li_2O$ + $Na_2O$ + $K_2O$) in the composition A-7 is more than 4 mass% and less than 9 mass%, the devitrification temperature of the glass and the viscosity thereof can be controlled within ranges suitable for manufacturing of a glass filler, a glass fiber, etc. Additionally, an increase in the melting point of the glass can be reduced to achieve more uniform melting of glass raw materials, and at the same time a high thermal resistance of the glass can be secured without an excessive decrease in glass transition temperature. The lower limit of ($Li_2O$ + $Na_2O$ + $K_2O$) can be 4.5 mass% or more, or 5 mass% or more. The upper limit of ($Li_2O$ + $Na_2O$ + $K_2O$) can be 8.5 mass% or less, or 8 mass% or less.
In the composition A-7, among the alkali metal oxides, lithium oxide ($Li_2O$) makes a particularly large contribution to the above-described effects attributed to the alkali metal oxides. From this point of view, the lower limit of the $Li_2O$ content in the composition A-7 can be 0.1 mass% or more, 0.5 mass% or more, or even 1 mass% or more. The upper limit of the $Li_2O$ content can be 3 mass% or less, or less than 2 mass%.

($TiO_2$) ($ZrO_2$) (T-$Fe_2O_3$) ($CeO_2$) ($F_2$, $Cl_2$) ($P_2O_5$)

The composition A-7 can further include $TiO_2$, $ZrO_2$, T-$Fe_2O_3$, $CeO_2$, $F_2$, $Cl_2$, and $P_2O_5$, provided that the content of each is as described for the composition A-1.

(Compositions A-8 and A-9)

In another specific example, the glass composition A further includes the following components, in mass%:

$$60 \le SiO_2 \le 75;$$

$$5 < Al_2O_3 \le 15;$$

$$5 \le CaO \le 20;$$

$$6 \le Na_2O \le 13;$$

and

$$9 \le (Li_2O + Na_2O + K_2O) \le 13 \text{ (composition A-8)}.$$

In another specific example, the glass composition A further includes the following components, in mass%:

$$60 \le SiO_2 \le 75;$$

$$5 < Al_2O_3 \le 15;$$

$$3 \le CaO \le 15;$$

$$9 \le Na_2O \le 20;$$

and

$$13 < (Li_2O + Na_2O + K_2O) \le 20 \text{ (composition A-9)}.$$

Additionally, glass fibers and glass fillers having the glass compositions A-8 and A-9 are excellent in thermal resistance and chemical durability, particularly acid resistance.

The components in the glass compositions A-8 and A-9 will be described hereinafter.

($SiO_2$)

$SiO_2$ is a component that forms the glass network, and is a main component of the compositions A-8 and A-9. Moreover, in the compositions A-8 and A-9, $SiO_2$ is a component that adjusts the devitrification temperature and the viscosity during glass forming while maintaining the thermal resistance of the glass, and is a component that improves the acid resistance. When the $SiO_2$ content in each of the compositions A-8 and A-9 is 60 mass% or more and 75 mass% or less, not only an increase in devitrification temperature is reduced, but the acid resistance of the glass increases. Moreover, in this range, the melting point of the glass is not excessively high and more uniform melting of raw materials is achieved. The lower limit of the $SiO_2$ content can be 63 mass% or more, 64 mass% or more, or even more than 65 mass%. The upper limit of the $SiO_2$ content can be 70 mass% or less, 68 mass% or less, or even 67 mass% or less.

($B_2O_3$)

The compositions A-8 and A-9 can further include $B_2O_3$. $B_2O_3$ is a component that forms the glass network. Moreover, in the compositions A-8 and A-9, $B_2O_3$ is also a component that adjusts the devitrification temperature and the viscosity during glass forming. The upper limit of the $B_2O_3$ content in each of the compositions A-8 and A-9 can be 6 mass% or less, less than 2 mass%, less than 1 mass%, or even less than 0.1 mass%. The compositions A-8 and A-9 may be substantially free of $B_2O_3$.

(Al$_2$O$_3$)

Al$_2$O$_3$ is a component that forms the glass network. Moreover, in the compositions A-8 and A-9, Al$_2$O$_3$ is also a component that adjusts the devitrification temperature and the viscosity during glass forming while maintaining the thermal resistance of the glass, and Al$_2$O$_3$ is a component that improves the water resistance of the glass. Meanwhile, excessive inclusion of Al$_2$O$_3$ decreases the acid resistance of the glass. When the Al$_2$O$_3$ content in each of the compositions A-8 and A-9 is more than 5 mass% and 15 mass% or less, the inclusion of Al$_2$O$_3$ sufficiently provides the adjusting effect on the devitrification temperature and the viscosity. Additionally, in this case, not only an increase in devitrification temperature is reduced, but the water resistance and the acid resistance of the glass increase. Moreover, in this case, the melting point of the glass is not excessively high and more uniform melting of raw materials is achieved. The lower limit of the Al$_2$O$_3$ content can be 6 mass% or more, 7 mass% or more, or even more than 8 mass%. The upper limit of the Al$_2$O$_3$ content can be 13 mass% or less, 12 mass% or less, or even less than 12 mass%.

(MgO)

The compositions A-8 and A-9 can further include MgO. In the compositions A-8 and A-9, MgO is a component that adjusts the devitrification temperature and the viscosity during glass forming while maintaining the thermal resistance of the glass. That is, MgO can be included in the compositions A-8 and A-9 as a component for adjusting the devitrification temperature and the viscosity during glass forming although inclusion of MgO in the compositions A-8 and A-9 is not essential. The lower limit of the MgO content in each of the compositions A-8 and A-9 can be 0 mass% or more, 0.1 mass% or more, 1 mass% or more, or even 2 mass% or more. The upper limit of the MgO content can be 10 mass% or less, 8 mass% or less, 5 mass% or less, or even 4 mass% or less. When MgO is included and the MgO content is in these ranges, the devitrification temperature of the glass and the viscosity thereof during melting can be controlled within ranges suitable for manufacturing of a glass filler, a glass fiber, etc.

(CaO)

In the compositions A-8 and A-9, CaO is a component that adjusts the devitrification temperature and the viscosity during glass forming while maintaining the thermal resistance of the glass. The CaO content varies depending on the total alkali metal oxide content (Li$_2$O + Na$_2$O + K$_2$O). When the total alkali metal oxide content (Li$_2$O + Na$_2$O + K$_2$O) is 9 mass% or more and 13 mass% or less, the CaO content is 5 mass% or more and 20 mass% or less (composition A-8). In the composition A-8, since the total alkali metal oxide content and the CaO content are in these ranges, the devitrification temperature of the glass and the viscosity thereof during melting can be controlled within ranges suitable for manufacturing of a glass filler, a glass fiber, etc. In this case, the lower limit of the CaO content can be 8 mass% or more, and may be 9 mass% or more, 10 mass% or more, or even more than 10 mass%. The upper limit of the CaO content can be 18 mass% or less, 16 mass% or less, or even 15 mass% or less.

When the total alkali metal oxide content (Li$_2$O + Na$_2$O + K$_2$O) is more than 13 mass% and 20 mass% or less, the CaO content is 3 mass% or more and 15 mass% or less (composition A-9). In the composition A-9, since the total alkali metal oxide content and the CaO content are in these ranges, the devitrification temperature of the glass and the viscosity thereof during melting can be controlled within ranges suitable for manufacturing of a glass filler, a glass fiber, etc. In this case, the lower limit of the CaO content can be 4 mass% or more, 5 mass% or more, or even 6 mass% or more. The upper limit of the CaO content can be 12 mass% or less, or 10 mass% or less.

For the compositions A-8 and A-9, when ease of shaping of the glass composition is given priority, attention can be focused on the sum (MgO + CaO) of the MgO content and the CaO content, which are the contents of components that adjust the devitrification temperature and the viscosity during glass forming. A preferable (MgO + CaO) value varies depending on the total alkali metal oxide content (Li$_2$O + Na$_2$O + K$_2$O) in the compositions A-8 and A-9.

When the total alkali metal oxide content (Li$_2$O + Na$_2$O + K$_2$O) is 9 mass% or more and 13 mass% or less, (MgO + CaO) can be 5 mass% or more and 30 mass% or less. In the composition A-8, since the total alkali metal oxide content and the sum of the MgO content and the CaO content are in these ranges, the devitrification temperature of the glass and the viscosity thereof during melting can be controlled within ranges suitable for manufacturing of a glass filler, a glass fiber, etc. Additionally, a high acid resistance of the glass can be secured. In this case, the lower limit of (MgO + CaO) can be 11 mass% or more, 12 mass% or more, 13 mass% or more, or even 14 mass% or more. The upper limit of (MgO + CaO) can be 26 mass% or less, 23 mass% or less, or even 20 mass% or less.

When the total alkali metal oxide content (Li$_2$O + Na$_2$O + K$_2$O) is more than 13 mass% and 20 mass% or less, (MgO + CaO) can be 3 mass% or more and 25 mass% or less. In the composition A-9, since the total alkali metal oxide content and the sum of the MgO content and the CaO content are in these ranges, the devitrification temperature of the glass and the viscosity thereof during melting can be controlled within ranges suitable for manufacturing of a glass filler, a glass fiber, etc. Additionally, a high acid resistance of the glass can be secured. In this case, the lower limit of (MgO + CaO) can be 6 mass% or more, 8 mass% or more, 9 mass% or more, or even 10 mass% or more. The upper limit of (MgO + CaO) can be 20 mass% or less, 17 mass% or less, or even 15 mass% or less.

(SrO) (BaO) (ZnO)

Each of the compositions A-8 and A-9 can further include SrO, BaO, and ZnO, provided that the content of each is as described for the composition A-1. However, the upper limit of each of the SrO content, the BaO content, and the ZnO content may be 10 mass% or less.

($Li_2O$, $Na_2O$, $K_2O$)

In the compositions A-8 and A-9, the alkali metal oxides ($Li_2O$, $Na_2O$, $K_2O$) are components that adjust the devitrification temperature and the viscosity during glass forming while maintaining the thermal resistance of the glass. The total alkali metal oxide content ($Li_2O + Na_2O + K_2O$) is 9 mass% or more and 13 mass% or less in the composition A-8, and is more than 13 mass% and 20 mass% or less in the composition A-9. Since the total alkali metal oxide content in each of the compositions A-8 and A-9 is in these ranges, the devitrification temperature of the glass and the viscosity thereof during melting decrease to improve the formability of the glass and thus the efficiency of production of a glass fiber and a glass filler is improved. Additionally, in this case, more uniform melting of glass raw materials can be achieved, and at the same time a high thermal resistance of the glass can be secured without an excessive decrease in glass transition temperature.

The lower limit of ($Li_2O + Na_2O + K_2O$) in the composition A-8 can be 9.5 mass% or more, or 10 mass% or more. The upper limit of ($Li_2O + Na_2O + K_2O$) in the composition A-8 can be 12.5 mass% or less, or 12 mass% or less. The lower limit of ($Li_2O + Na_2O + K_2O$) in the composition A-9 can be 13.5 mass% or more. The upper limit of ($Li_2O + Na_2O + K_2O$) in the composition A-9 can be 18 mass% or less, 16 mass% or less, 15 mass% or less, or even less than 15 mass%.

In the compositions A-8 and A-9, among the alkali metal oxides, $Li_2O$ makes a particularly large contribution to the above-described effects attributed to the alkali metal oxides. The inclusion of $Li_2O$ can decrease the working temperature of the raw glass during formation of a glass fiber and a glass filler, and the decrease in working temperature facilitates the formation of the glass fiber and the glass filler, resulting in improvement of the efficiency of production thereof. However, excessive inclusion of $Li_2O$ decreases the glass transition temperature, decreasing the thermal resistance of the glass. The lower limit of the $Li_2O$ content in each of the compositions A-8 and A-9 can be 0 mass% or more, 0.1 mass% or more, 0.5 mass% or more, or even 1 mass% or more. The upper limit of the $Li_2O$ content can be 5 mass% or less, 4 mass% or less, 3 mass% or less, 2 mass% or less, or even less than 2 mass%.

The $Na_2O$ content is 6 mass% or more and 13 mass% or less in the composition A-8 and is 9 mass% or more and 20 mass% or less in the composition A-9. For each composition, the above-described effect attributed to the alkali metal oxides is more reliably achieved when the $Na_2O$ content is in this range. The lower limit of the $Na_2O$ content in the composition A-8 can be 7 mass% or more, 8 mass% or more, or even 9 mass% or more. The upper limit of the $Na_2O$ content can be 12 mass% or less. The lower limit of the $Na_2O$ content in the composition A-9 can be 10 mass% or more, 11 mass% or more, or even 12 mass% or more. The upper limit of the $Na_2O$ content can be 17 mass% or less, 15 mass% or less, less than 15 mass%, or even 14 mass% or less.

The lower limit of the $K_2O$ content in each of the compositions A-8 and A-9 can be 0 mass% or more, 0.1 mass% or more, or even 0.5 mass% or more. The upper limit of the $K_2O$ content can be 5 mass% or less, 3 mass% or less, 2 mass% or less, less than 2 mass%, or even 1 mass% or less.

($TiO_2$) ($ZrO_2$) ($T\text{-}Fe_2O_3$) ($CeO_2$) ($F_2$, $Cl_2$) ($P_2O_5$)

Each of the compositions A-8 and A-9 can further include $TiO_2$, $ZrO_2$, $T\text{-}Fe_2O_3$, $CeO_2$, $F_2$, $Cl_2$, and $P_2O_5$, provided that the content of each is as described for the composition A-1.

(Composition A-10)

In another specific example, the glass composition A further includes the following components, in mass%:

$$60 \le SiO_2 \le 80;$$

$$5 \le B_2O_3 \le 20;$$

$$5 \leq Al_2O_3 \leq 15;$$

$$0.1 \leq (MgO + CaO) < 1;$$

and

$$9 < Na_2O < 13 \text{ (composition A-10)}.$$

A glass fiber and a glass filler having the glass composition A-10 are more suitable for incorporation in a resin (particularly an acrylic resin) than glass fillers, glass fibers, etc. formed of conventional glass compositions in terms of at least one property selected from refractive index, density, and Young's modulus.

The components in the glass composition A-10 will be described hereinafter.

$(SiO_2)$

$SiO_2$ is a component that forms the glass network, and is a main component (a component whose content is highest) of the composition A-10. Moreover, in the composition A-10, $SiO_2$ is a component that adjusts the devitrification temperature and the viscosity during glass forming. Furthermore, $SiO_2$ is a component that improves the water resistance and is also a component that adjusts the refractive index. When the $SiO_2$ content in the composition A-10 is 60 mass% or more and 80 mass% or less, not only such an increase in devitrification temperature that manufacturing of a glass filler, a glass fiber, etc. is difficult is reduced, but the water resistance of the glass increases. Moreover, in this range, the melting point of the glass is not excessively high and more uniform melting of raw materials is achieved. Furthermore, when the $SiO_2$ content is in this range, the refractive index of the glass can be adjusted to be in a range suitable for incorporation in an acrylic resin. The lower limit of the $SiO_2$ content can be 62 mass% or more, and may be 64 mass% or more, or even more than 65 mass%. The upper limit of the $SiO_2$ content can be 74 mass% or less, 73 mass% or less, 72 mass% or less, less than 71 mass%, or even less than 68 mass%.

$(B_2O_3)$

$B_2O_3$ is a component that forms the glass network and is also a component that adjusts the devitrification temperature and the viscosity during glass forming. Moreover, $B_2O_3$ is also a component that adjusts the refractive index. When the $B_2O_3$ content in the composition A-10 is 5 mass% or more and 20 mass% or less, not only such an increase in devitrification temperature that manufacturing of a glass filler, a glass fiber, etc. is difficult is reduced, but the refractive index of the glass can be adjusted to be in a range suitable for incorporation in an acrylic resin. Moreover, in this case, the melting point of the glass is not excessively high and more uniform melting of raw materials is achieved. The lower limit of the $B_2O_3$ content can be 8 mass% or more, 10 mass% or more, 11 mass% or more, 12 mass% or more, 13 mass% or more, or even 14 mass% or more. The upper limit of the $B_2O_3$ content can be 18 mass% or less, 17 mass% or less, 16 mass% or less, or even less than 15 mass%.

$(Al_2O_3)$

$Al_2O_3$ is a component that forms the glass network and is also a component that adjusts the devitrification temperature and the viscosity during glass forming. Moreover, $Al_2O_3$ is a component that improves the water resistance of the glass and is also a component that adjusts the refractive index. When the $Al_2O_3$ content in the composition A-10 is 5 mass% or more and 15 mass% or less, not only such an increase in devitrification temperature that manufacturing of a glass filler, a glass fiber, etc. is difficult is reduced, but the refractive index of the glass can be adjusted to be in a range suitable for incorporation in an acrylic resin. Moreover, in this case, the melting point of the glass is not excessively high and more uniform melting of raw materials is achieved. The lower limit of the $Al_2O_3$ content can be 6 mass% or more, and may be 6.5 mass% or more, or even more than 7 mass% or more. The upper limit of the $Al_2O_3$ content can be 13 mass% or less, less than 12 mass%, less than 10 mass%, less than 9 mass%, or even less than 8 mass%.

(MgO, CaO)

The composition A-10 can further include MgO. In the composition A-10, MgO is a component that adjusts the devitrification temperature and viscosity during glass forming and is also a component that adjusts the refractive index of the glass. Therefore, the lower limit of the MgO content in the composition A-10 can be 0.1 mass% or more. The upper limit of the MgO content can be less than 1 mass%, less than 0.7 mass%, less than 0.5 mass%, or even less than 0.3 mass%.

The composition A-10 can further include CaO. In the composition A-10, CaO is a component that adjusts the devitrification temperature and the viscosity during glass forming and is also a component that adjusts the refractive index. Although addition of CaO and addition of MgO can exert the same effect, addition of MgO is more advantageous than addition of CaO from the viewpoint of further reducing the refractive index. The CaO content is preferably controlled to be lower than the MgO content. Therefore, the CaO content in the composition A-10 can be less than 1 mass%, less than 0.5 mass%, less than 0.3 mass%, or even less than 0.1 mass%.

When the sum (MgO + CaO) of the MgO content and the CaO content is 0.1 mass% or more and less than 1 mass% in the composition A-10, the devitrification temperature of the molten glass and the viscosity thereof can be controlled within ranges suitable for manufacturing of a glass filler, a glass fiber, etc. while an excessive increase in devitrification temperature is reduced. Moreover, in this range, the refractive index of the glass can be adjusted to be in a range suitable for incorporation in an acrylic resin. The lower limit of (MgO + CaO) can be 0.15 mass% or more. The upper limit of (MgO + CaO) can be less than 0.7 mass%, less than 0.5 mass%, or even less than 0.3 mass%.

(SrO) (BaO) (ZnO)

The composition A-10 can further include SrO, BaO, and ZnO, provided that the content of each is as described for the composition A-1. However, the upper limit of each of the SrO content, the BaO content, and the ZnO content may be 10 mass% or less.

(Li$_2$O, Na$_2$O, K$_2$O)

In the composition A-10, the alkali metal oxides (Li$_2$O, Na$_2$O, K$_2$O) are components that adjust the devitrification temperature and the viscosity during glass forming.

The composition A-10 can further include Li$_2$O. The upper limit of the Li$_2$O content in the composition A-10 can be 5 mass% or less, less than 2 mass%, less than 1 mass%, less than 0.75 mass%, or even less than 0.5 mass%.

When the Na$_2$O content in the composition A-10 is more than 9 mass% and less than 13 mass%, the devitrification temperature of the molten glass and the viscosity thereof can be controlled within ranges suitable for manufacturing of a glass filler, a glass fiber, etc. while an excessive increase in devitrification temperature is reduced. Additionally, an increase in the melting point of the glass can be reduced to achieve more uniform melting of glass raw materials, and at the same time a high thermal resistance of the glass can be secured without an excessive decrease in glass transition temperature. The lower limit of the Na$_2$O content can be 9.5 mass% or more, or 10 mass% or more. The upper limit of the Na$_2$O content can be 12.5 mass% or less, or 12 mass% or less.

The composition A-10 can further include K$_2$O. The lower limit of the K$_2$O content in the composition A-10 can be 0.1 mass% or more, and may be more than 0.5 mass%. The upper limit of the K$_2$O content can be 5 mass% or less, 3 mass% or less, 2 mass% or less, less than 1 mass%, or even 0.8 mass% or less.

When the total alkali metal oxide content (Li$_2$O + Na$_2$O + K$_2$O) in the composition A-10 is more than 9 mass% and less than 13 mass%, the devitrification temperature of the molten glass and the viscosity thereof can be controlled within ranges suitable for manufacturing of a glass filler, a glass fiber, etc. while an excessive increase in devitrification temperature is reduced. Additionally, an increase in the melting point of the glass can be reduced to achieve more uniform melting of glass raw materials, and at the same time a high thermal resistance of the glass can be secured without an excessive decrease in glass transition temperature. The lower limit of (Li$_2$O + Na$_2$O + K$_2$O) can be 9.5 mass% or more, and may be more than 10 mass%, 10.5 mass% or more, or even more than 11 mass%. The upper limit of (Li$_2$O + Na$_2$O + K$_2$O) can be 18 mass% or less, less than 15 mass%, or even less than 13 mass%.

(TiO$_2$) (ZrO$_2$) (T-Fe$_2$O$_3$) (CeO$_2$) (F$_2$, Cl$_2$) (P$_2$O$_5$)

The composition A-10 can further include TiO$_2$, ZrO$_2$, T-Fe$_2$O$_3$, CeO$_2$, F$_2$, Cl$_2$, and P$_2$O$_5$, provided that the content of each is as described for the composition A-1.

(Composition A-11)

In another specific example, the glass composition A further includes the following components, in mass%:

$$45 \leq SiO_2 \leq 65;$$

$$21 \leq B_2O_3 \leq 35;$$

$$5 \leq Al_2O_3 \leq 15;$$

and

$$4 \leq Na_2O \leq 9 \text{ (composition A-11)}.$$

(Composition A-12)

In another specific example, the glass composition A further includes the following components, in mass%:

$$50 \leq SiO_2 \leq 75;$$

$$0.1 \leq (MgO + CaO) \leq 20;$$

$$9 \leq (Li_2O + Na_2O + K_2O) \leq 20;$$

and

$$5 \leq ZrO_2 \leq 20 \text{ (composition A-12)}.$$

A glass filler and a glass fiber formed of the glass composition A-12 can have a high chemical durability.
The components in the glass composition A-12 will be described hereinafter.

(SiO$_2$)

SiO$_2$ is a component that forms the glass network, and is a main component (a component whose content is highest) of the composition A-12. Moreover, in the composition A-12, SiO$_2$ is a component that adjusts the devitrification temperature and the viscosity during glass forming and is a component that improves the water resistance and the acid resistance. When the SiO$_2$ content in the composition A-12 is 50 mass% or more and 75 mass% or less, not only such an increase in devitrification temperature that manufacturing of a glass filler, a glass fiber, etc. is difficult is reduced, but the water resistance and the acid resistance of the glass increase. Moreover, in this range, the melting point of the glass is not excessively high and more uniform melting of raw materials is achieved. The lower limit of the SiO$_2$ content can be 54 mass% or more, and may be 56 mass% or more, 58 mass% or more, 60 mass% or more, 62 mass% or more, 63 mass% or more, 64 mass% or more, more than 65 mass%, or even more than 66 mass%. The upper limit of the SiO$_2$ content can be 74 mass% or less, 73 mass% or less, 71 mass% or less, or even 70 mass% or less.

(B$_2$O$_3$)

The composition A-12 can further include B$_2$O$_3$. In the composition A-12, B$_2$O$_3$ is a component that forms the glass network. Moreover, B$_2$O$_3$ is also a component that adjusts the devitrification temperature and the viscosity during glass forming. Meanwhile, excessive inclusion of B$_2$O$_3$ decreases the acid resistance of the glass. The upper limit of the B$_2$O$_3$ content can be 5 mass% or less, less than 3 mass%, less than 2 mass%, less than 1 mass%, or even 0.5 mass% or less.

(Al$_2$O$_3$)

The composition A-12 can further include Al$_2$O$_3$. In the composition A-12, Al$_2$O$_3$ is a component that forms the glass network. Moreover, Al$_2$O$_3$ is also a component that adjusts the devitrification temperature and the viscosity during glass forming and is a component that improves the water resistance of the glass. Meanwhile, excessive inclusion of

$Al_2O_3$ decreases the acid resistance of the glass. The upper limit of the $Al_2O_3$ content can be 5 mass% or less, 4 mass% or less, less than 3 mass%, less than 2 mass%, or even 1.5 mass% or less.

($B_2O_3$ + $Al_2O_3$)

For the composition A-12, when the ease of formation and the acid resistance of a glass filler, a glass fiber, etc. are given priority, the sum ($B_2O_3$ +$Al_2O_3$) of the $B_2O_3$ content and the $Al_2O_3$ content can be a key parameter. In the composition A-12, ($B_2O_3$ + $Al_2O_3$) can be 5 mass% or less. In this case, not only such an increase in devitrification temperature that manufacturing of a glass filler, a glass fiber, etc. is difficult is reduced, but the acid resistance of the glass increases. Moreover, in this case, the melting point of the glass is not excessively high and more uniform melting of raw materials is achieved. The upper limit of ($B_2O_3$ + $Al_2O_3$) can be 4 mass% or less, less than 3 mass%, less than 2 mass%, or even less than 1.5 mass%.

(MgO, CaO)

The composition A-12 can further include MgO. In the composition A-12, MgO is a component that adjusts the devitrification temperature and the viscosity during glass forming. Moreover, MgO is also a component that adjusts the acid resistance and the water resistance of the glass composition. The lower limit of the MgO content can be 0.1 mass% or more, and may be 1 mass% or more, or even more than 2 mass%. The upper limit of the MgO content can be 15 mass% or less, 12 mass% or less, 10 mass% or less, 8 mass% or less, 6 mass% or less, or even 5 mass% or less.
The composition A-12 can further include CaO. In the composition A-12, CaO is a component that adjusts the devitrification temperature and the viscosity during glass forming. Moreover, CaO is also a component that adjusts the acid resistance and the water resistance of the glass composition. The lower limit of the CaO content can be 0.1 mass% or more, and may be 1 mass% or more, 2 mass% or more, or even more than 3 mass%. The upper limit of the CaO content can be 15 mass% or less, 12 mass% or less, 10 mass% or less, or even 8 mass% or less.
When the sum (MgO + CaO) of the MgO content and the CaO content is 0.1 mass% or more and 20 mass% or less in the composition A-12, the devitrification temperature of the molten glass and the viscosity thereof can be controlled within ranges suitable for manufacturing of a glass filler, a glass fiber, etc. while an excessive increase in devitrification temperature is reduced. Moreover, in this range, the chemical durability of the glass can also be improved. The lower limit of (MgO + CaO) can be 2 mass% or more, 4 mass% or more, 6 mass% or more, 8 mass% or more, or even 9 mass% or more. The upper limit of (MgO + CaO) can be 20 mass% or less, 18 mass% or less, 16 mass% or less, less than 14 mass%, or even 13 mass% or less.

(SrO) (BaO) (ZnO)

The composition A-12 can further include SrO, BaO, and ZnO, provided that the content of each is as described for the composition A-1. However, the upper limit of each of the SrO content, the BaO content, and the ZnO content may be 10 mass% or less.

($Li_2O$, $Na_2O$, $K_2O$)

In the composition A-12, the alkali metal oxides ($Li_2O$, $Na_2O$, $K_2O$) are components that adjust the devitrification temperature and the viscosity during glass forming. Moreover, the alkali metal oxides ($Li_2O$, $Na_2O$, $K_2O$) are also components that adjust the acid resistance and the water resistance of the glass.
The composition A-12 can further include $Li_2O$. The lower limit of the $Li_2O$ content in the composition A-12 can be 0.1 mass% or more, 0.5 mass% or more, 1 mass% or more, or 1.5 mass% or more. The upper limit of the $Li_2O$ content can be 5 mass% or less, 4 mass% or less, 3.5 mass% or less, or even 3 mass% or less.
In the composition A-12, the $Na_2O$ content can be 6 mass% or more and 20 mass% or less. In this case, the devitrification temperature of the molten glass and the viscosity thereof can be controlled within ranges suitable for manufacturing of a glass filler, a glass fiber, etc. while an excessive increase in devitrification temperature is reduced. Additionally, an increase in the melting point of the glass can be reduced to achieve more uniform melting of glass raw materials, and at the same time a high thermal resistance of the glass can be secured without an excessive decrease in glass transition temperature. Furthermore, in this range, the chemical durability of the glass can also be improved. The lower limit of the $Na_2O$ content can be 7 mass% or more, 7.5 mass% or more, or even 8 mass% or more. The upper limit of the $Na_2O$ content can be 18 mass% or less, 16 mass% or less, 15 mass% or less, 14 mass% or less, less than 13 mass%, or even less than 12 mass%.
The composition A-12 can further include $K_2O$. The lower limit of the $K_2O$ content in the composition A-12 can be 0.1 mass% or more, and may be more than 0.5 mass%. The upper limit of the $K_2O$ content in the composition A-12 can be 5 mass% or less, less than 4 mass%, 3 mass% or less, or even less than 2 mass%.

When the total alkali metal oxide content ($Li_2O$ + $Na_2O$ + $K_2O$) in the composition A-12 is 9 mass% or more and 20 mass% or less, the devitrification temperature of the molten glass and the viscosity thereof can be controlled within ranges suitable for manufacturing of a glass filler, a glass fiber, etc. while an excessive increase in devitrification temperature is reduced. Additionally, an increase in the melting point of the glass can be reduced to achieve more uniform melting of glass raw materials, and at the same time a high thermal resistance of the glass can be secured without an excessive decrease in glass transition temperature. Furthermore, in this range, the chemical durability of the glass can also be improved. The lower limit of ($Li_2O$ + $Na_2O$ + $K_2O$) can be 9.5 mass% or more, or 10 mass% or more. The upper limit of ($Li_2O$ + $Na_2O$ + $K_2O$) can be 18 mass% or less, 16 mass% or less, 15 mass% or less, 14 mass% or less, less than 13 mass%, or even less than 12 mass%.

($TiO_2$)

The composition A-12 can further include $TiO_2$, T-$Fe_2O_3$, $CeO_2$, $F_2$, $Cl_2$, and $P_2O_5$, provided that the content of each is as described for the composition A-1.

($ZrO_2$)

In the glass composition A-12, $ZrO_2$ is a component that adjusts the devitrification temperature and the viscosity during glass forming. Moreover, $ZrO_2$ is also a component that adjusts the acid resistance and the water resistance of the glass composition. When the $ZrO_2$ content in the composition A-12 is 5 mass% or more and 20 mass% or less, not only such an increase in devitrification temperature that manufacturing of a glass filler, a glass fiber, etc. is difficult is reduced, but the water resistance and the acid resistance of the glass increase. The lower limit of the $ZrO_2$ content in the composition A-12 can be more than 5 mass%, 5.5 mass% or more, 6 mass% or more, 6.5 mass% or more, or even 7 mass% or more. The upper limit of the $ZrO_2$ content can be 18 mass% or less, 15 mass% or less, 12 mass% or less, less than 10 mass%, 9.5 mass% or less, 9 mass% or less, 8.5 mass% or less, or even 8 mass% or less.

(T-$Fe_2O_3$) ($CeO_2$) ($F_2$, $Cl_2$) ($P_2O_5$)

The composition A-12 can further include T-$Fe_2O_3$, $CeO_2$, $F_2$, $Cl_2$, and $P_2O_5$, provided that the content of each is as described for the composition A-1.

(Additional component)

The glass composition A can include at least one selected from $La_2O_3$, $WO_3$, $Nb_2O_5$, $Y_2O_3$, $MoO_3$, $Ta_2O_5$, $MnO_2$, $Cr_2O_3$, CuO, and CoO as an additional component, provided that the content of each is 0 mass% or more and 5 mass% or less. The acceptable content of each of these additional components can be less than 2 mass%, less than 1 mass%, less than 0.5 mass%, or even less than 0.1 mass%. The acceptable total content of these additional components can be 5 mass% or less, less than 2% mass%, less than 1 mass%, less than 0.5 mass%, or even less than 0.1 mass%. However, the glass composition A may be substantially free of these additional components.

The glass composition A can include at least one selected from $Br_2$, $I_2$, $As_2O_3$, and $Sb_2O_3$ as an additive, provided that the content of each additive is 0 mass% or more and 1 mass% or less. The acceptable content of each of these components can be less than 0.5 mass%, less than 0.2 mass%, or even less than 0.1 mass%. The acceptable total content of these components can be 1 mass% or less, less than 0.5% mass%, less than 0.2 mass%, or even less than 0.1 mass%. However, the glass composition A may be substantially free of these additional components.

The glass composition A can include $H_2O$, OH, $H_2$, $CO_2$, CO, He, Ne, Ar, and $N_2$, provided that the content of each is 0 mass% or more and 0.1 mass% or less. The acceptable content of each of these components can be less than 0.05 mass%, less than 0.03 mass%, or even less than 0.01 mass%. The acceptable total content of these components can be 0.1 mass% or less, less than 0.05% mass%, less than 0.03 mass%, or even less than 0.01 mass%. However, the glass composition A may be substantially free of these additional components.

The glass composition A may include a small amount of a noble metal element. For example, the glass composition A can include at least one noble metal element such as Pt, Rh, Au, and Os, provided that the content of each noble metal element is 0 mass% or more and 0.1 mass% or less. The acceptable content of each of these components can be less than 0.1 mass%, less than 0.05 mass%, less than 0.03 mass%, or even less than 0.01 mass%. The acceptable total content of these components can be 0.1 mass% or less, less than 0.05% mass%, less than 0.03 mass%, or even less than 0.01 mass%. However, the glass composition A may be substantially free of these additional components.

<Properties>

Properties that the glass composition of the present invention can have will be described hereinafter.

(Melting properties)

A temperature at which the viscosity of the molten glass is 1000 dPa•sec (1000 poise) is called a working temperature of the glass, and is the most suitable temperature for shaping of the glass. In the case of manufacturing a glass fiber or a glass filler of glass fibers or flaky glasses, a variation in flaky glass thickness or a variation in glass fiber diameter can be reduced when the glass has a working temperature of 1100°C or higher. When the working temperature is 1450°C or lower, the fuel cost required for glass melting can be reduced, and a glass manufacturing apparatus is less likely to be thermally eroded and accordingly the life span of the apparatus is extended. The lower limit of the working temperature can be 1100°C or higher, 1150°C or higher, 1200°C or higher, 1250°C or higher, or even 1300°C or higher. The upper limit of the working temperature can be 1450°C or lower, 1420°C or lower, 1400°C or lower, 1380°C or lower, or even lower than 1350°C.

A temperature difference $\Delta T$ is determined by subtracting the devitrification temperature from the working temperature. A greater temperature difference $\Delta T$ makes devitrification less likely to occur at shaping of the glass, and, consequently, a homogeneous glass can be manufactured in a high yield rate. Therefore, the temperature difference $\Delta T$ of the glass composition A can be 0°C or more, 10°C or more, 20°C or more, 30°C or more, 40°C or more, or even 50°C or more. Meanwhile, when the temperature difference $\Delta T$ is 500°C or less, the glass composition can be easily adjusted. The temperature difference $\Delta T$ of the glass composition A can be 500°C or less, 400°C or less, 300°C or less, or even 200°C or less.

(Water resistance)

An amount of alkali dissolution can be employed as a measure of water resistance. The smaller the amount of alkali dissolution is, the higher water resistance the glass has. In the case where a glass filler is incorporated in the resin composition, when the amount of alkali dissolution, which is determined according to the later-described test, of the glass composition is 0.40 mg or less, a decrease in the strength of the resin composition by water is reduced. In a preferred embodiment, the upper limit of the amount of alkali dissolution of the glass composition may be 0.40 mg or less, 0.35 mg or less, or even 0.33 mg or less. The lower limit of the amount of alkali dissolution is commonly about 0.001 mg, and may be 0.01 mg or more, or even 0.03 mg or more.

(Permittivity)

The glass composition of the present embodiment can have a low permittivity. The glass composition has a permittivity of 5.0 or less, 4.9 or less, 4.8 or less, 4.7 or less, 4.6 or less, even 4.5 or less, or, in some cases, 4.4 or less at a measurement frequency of 1 GHz. The term "permittivity" refers to "relative permittivity" (dielectric constant) in a strict sense. Herein, "relative permittivity" is expressed simply as "permittivity", as is conventional. The permittivity is determined at room temperature (25°C).

[Glass fiber]

The above-described glass composition is suitable for use as a glass fiber. The glass fiber may be a long glass fiber or a short glass fiber. The long glass fiber is manufactured by allowing a glass melt having a controlled viscosity to flow out through a nozzle and winding the glass melt by a winding machine. This continuous fiber is cut to an appropriate length when used. The short glass fiber is manufactured by forcing a glass melt to fly by high-pressure air, centrifugal force, or the like. The short glass fiber is sometimes called "glass wool" for its wool-like form.

[Glass fiber product]

The long glass fiber and the short glass fiber can be processed into various glass fiber products before used. A glass fiber product particularly requiring the glass fiber having a high Young's modulus and a large crack initiation load is, for example, a rubber-reinforcing cord. The rubber-reinforcing cord includes strands each formed of a bundle of a plurality of long glass fibers (called filaments). Each strand is formed of, for example, 100 to 2000 glass filaments, typically 200 to 600 glass filaments. Each strand is often covered by a coating layer for improvement of adhesion to a rubber. Since a treating liquid and a method for forming the coating layer are described in detail in documents such as Patent Literature 1, and thus will not be described herein.

Another glass fiber product requiring the features, namely, a high Young's modulus and a large crack initiation load, of the glass fiber is, for example, a non-woven glass fiber fabric. The non-woven glass fiber fabric is a non-woven fabric formed of the glass fiber, and an example thereof is glass paper manufactured by making fine short glass fibers into paper. Non-woven glass fiber fabrics are commonly expected to have a high strength. In particular, in applications such as reinforcements of electrolyte membranes of fuel cells and separators of electrochemical devices such as secondary batteries, non-woven glass fiber fabrics are often required to have a high porosity. Therefore, there is a great demand for an improved glass fiber strength particularly in these applications.

As described above, preferable examples of the glass fiber products include a rubber-reinforcing cord including a strand formed of a bundle of long glass fibers and a non-woven glass fiber fabric including short glass fibers.

[Glass particle product]

The above-described glass composition is suitable for being used for not only a glass fiber but also a glass particle, particularly a glass filler such as a glass flake. A glass flake is a scaly glass, which is also called "flaky glass", and has, for example, an average thickness of 2 to 5 $\mu$m and an average particle diameter of 10 to 4000 $\mu$m (particularly 10 to 1000 $\mu$m). Glass flakes are mass-produced by shaping a molten glass by a blow process, a rotary process, etc. The glass particle typified by a glass flake is sometimes mixed in a matrix as a filler for improvement of the strength of the matrix. The matrix is typically a plastic. Especially in recent years, plastic parts have been made smaller, which increases the demand for further improvement of the dimensional stability and the strength of parts. Accordingly, the glass composition having a high Young's modulus and a large crack initiation load is desirably used also for a glass particle used as a filler. The shape of the glass particle, which is typically flaky, is not specified as long as the shape of the glass particle falls under the category of "particle" (having a maximum diameter of 5 mm or less).

[Glass filler]

(Forms of glass filler)

The form of the glass filler is not limited to a particular one, and may be, for example, at least one selected from a flaky glass, a chopped strand, a milled fiber, glass powder, a glass bead, a flat fiber, and a thin glass piece. It should be noted that these forms are not strictly distinguished from each other. Two or more glass fillers having different forms may be combined and used as a filler. Each form will be described hereinafter.

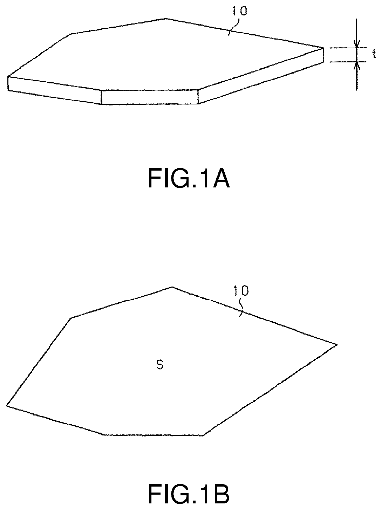

The flaky glass is also called "scaly glass", and has the shape of a flake. The flaky glass has an average thickness of, for example, 0.1 to 15 $\mu$m. As shown in FIG. 1A, the thickness of the flaky glass corresponds to the distance t between two principal surfaces of a flaky glass 10. FIG. 1B shows a principal surface of the flaky glass 10, the principal surface having an area S. The average particle diameter is, for example, 0.2 to 15000 $\mu$m. The flaky glass has an aspect ratio of, for example, 2 to 1000. The aspect ratio can be determined by dividing the average particle diameter by the average thickness. The average thickness can be determined by measuring 100 or more flaky glasses for their thicknesses t using a scanning electron microscope (SEM) and calculating the average thereof. The average particle diameter of the flaky glasses can be defined as a particle diameter (D50) at a cumulative volume percentage of 50% in a particle size distribution measured by a laser diffraction scattering method.

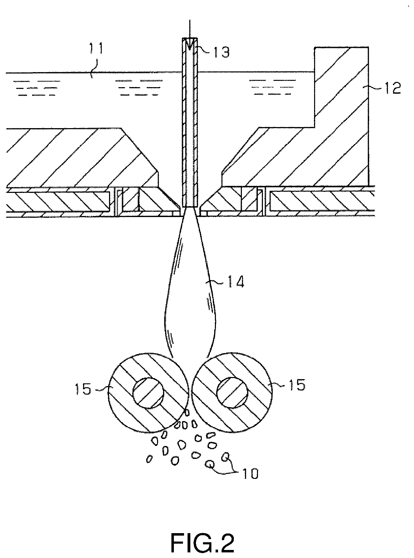

The flaky glass can be obtained by a known blow process, cup process, or the like. FIG. 2 shows a manufacturing apparatus using the blow process. In this apparatus, a raw glass 11 having predetermined composition and molten in a refractory furnace 12 is inflated into a balloon by a gas delivered into a blow nozzle 13, and thus a hollow glass film 14 is formed. This hollow glass film 14 is crushed by a pair of pressing rolls 15 to give the flaky glasses 10.

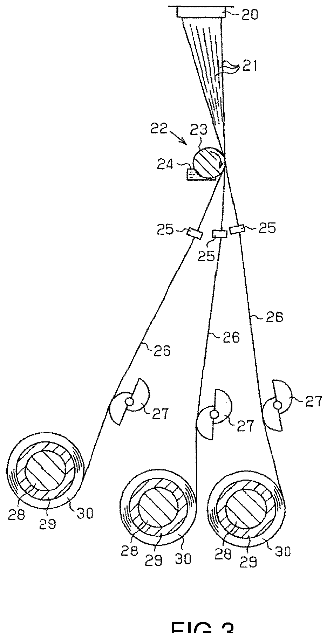

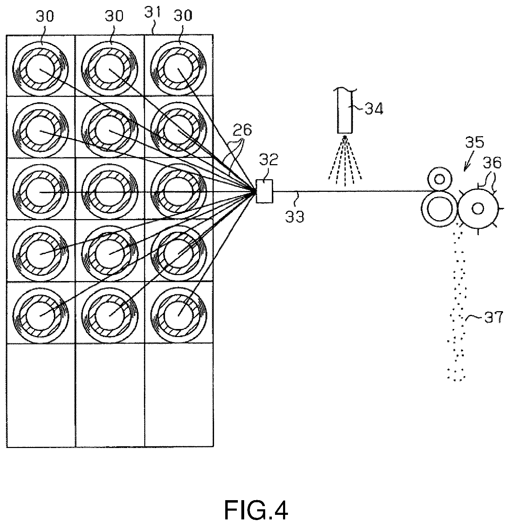

The chopped strand has a shape obtained by cutting a glass fiber into short pieces. The chopped strand has a fiber diameter of, for example, 1 to 50 $\mu$m and has an aspect ratio of, for example, 2 to 1000. The aspect ratio of the chopped strand can be determined by dividing the fiber length by the fiber diameter. The chopped strand can be manufactured, for example, using apparatuses as shown in FIGS. 3 and 4.

As shown in FIG. 3, a raw glass having predetermined composition and molten in a refractory furnace is drawn through a bushing 20 having a large number of (for example, 2400) nozzles in the bottom, and drawn out as a large number of glass filaments 21. The glass filaments 21 are sprayed with cooling water, and then a binder (sizing agent) 24 is applied to the glass filaments 21 by an application roller 23 of a binder applicator 22. The large number of glass filaments 21 having the binder 24 thereon are bundled, through reinforcing pads 25, into three strands 26 each formed of, for example, about 800 glass filaments 21. While being traversed by a traverse finger 27, each of the strands 26 is wound on a cylindrical tube 29 mounted on a collet 28. The cylindrical tube 29 on which the strand 26 is wound is detached from the collet 28, and thus a cake (wound strand body) 30 is obtained.

Next, as shown in FIG. 4, the cakes 30 are placed in a creel 31, and the strands 26 are drawn out from the cakes 30 and bundled into a strand bundle 33 through a bundle guide 32. The strand bundle 33 is sprayed with water or a treatment liquid by a spraying apparatus 34. The strand bundle 33 is cut by a rotating blade 36 of a cutting apparatus 35, and thus chopped strands 37 are obtained.

The milled fiber has a shape obtained by cutting a glass fiber into powder. The milled fiber has a fiber diameter of, for example, 1 to 50 $\mu$m and has an aspect ratio of, for example, 2 to 500. The aspect ratio of the milled fiber can be determined by dividing the fiber length by the fiber diameter. The milled fiber can be obtained by a known method.

The glass powder is powdery glass, and is manufactured by crushing glass. The glass powder has an average particle diameter of, for example, 1 to 500 $\mu$m. The particle diameter of the glass powder is defined as the diameter of a sphere having the same volume as a particle of the glass powder. The glass powder can be obtained by a known method.

The glass bead has a spherical shape or an approximately spherical shape. The glass bead has an average particle diameter of, for example, 1 to 500 $\mu$m. The particle diameter of the glass bead is defined as the diameter of a sphere having the same volume as a particle of the glass bead. The glass bead can be obtained by a known method.

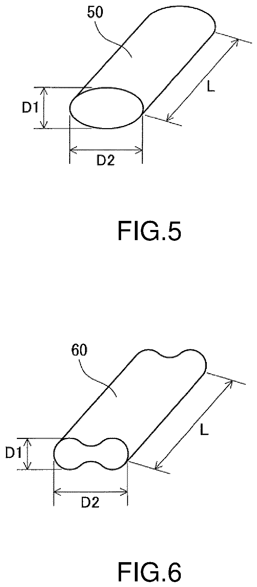

The flat fiber has a shape obtained by cutting a glass fiber whose cross-section has a flattened shape such as an elliptical shape. As shown in FIG. 5, a major axis D2 is longer than a minor axis D1 in a cross-section of the flat fiber, and D2/D1 is, for example, 1.2 or more. The minor axis D1 is, for example, 0.5 to 25 $\mu$m. The major axis D2 is, for example, 0.6 to 300 $\mu$m. The flat fiber has a length of, for example, 10 to 1000 $\mu$m. The flat fiber can be obtained by a known method. As shown in FIG. 6, the cross-sectional shape of the flat fiber may be a recessed shape in which a surface extending along the major axis D2 recedes in a central portion with respect to end portions.

The thin glass piece is a thin flaky glass. The thin glass pieces may be composed of, for example, flaky glasses having an average thickness of 0.1 to 2.0 $\mu$m. Alternately, for example, flaky glasses having a thickness of 0.01 to 2.0 $\mu$m may account for 90 mass% or more of the thin glass pieces. The thin glass piece having such a small average thickness and having a small variation in thickness exhibits a high resin reinforcing effect and also exhibits an excellent decreasing effect on the mold shrinkage factor of a resin.

The thin glass piece is suitable also for making limitations on, for example, the thickness of a resin molded article less strict than before. It is preferable that the thin glass pieces be composed of flaky glasses having an average thickness of 0.1 to 1.0 $\mu$m. It is preferable that the flaky glasses having a thickness of 0.05 to 1.0 $\mu$m account for 90 mass% or more of the thin glass pieces. The thin glass piece can be obtained by the above-described methods.

(Granulation of glass filler)

At least a portion of the glass fillers may be granulated. Granulation is a treatment in which the glass fillers are subjected to a binder treatment such that the glass fillers are bonded to each other by a binder to be granulated. The granular flaky glasses hardly scatter and are accordingly excellent in workability, and are also excellent in dispersibility in a resin. The use of the granular flaky glasses improves the feeding efficiency, thereby allowing more reliable quantitative feeding. The binder used in the granulation will be described hereinafter.

The binder preferably contains a surfactant and a binding component. The surfactant may be anionic, cationic, amphoteric, or nonionic. A nonionic surfactant is preferably used in the case where the binding component contains an epoxy resin or a urethane resin. This is because agglomeration of the binder can be reduced for stabilization. Examples of an anionic surfactant include dioctyl sodium sulfosuccinate, fatty acid salt, alkyl sulfate, alkyl sulfonate, alkyl aryl sulfonate, alkyl naphthalene sulfonate, alkyl sulfosuccinate, alkyl diphenyl ether disulfonate, alkyl phosphate, polyoxyethylene alkyl sulfate, polyoxyethylene alkyl allyl sulfate, and sulfosuccinate. Examples of a cationic surfactant include higher amine halogen acid salt, alkyl pyridinium halide, and quaternary ammonium salt. Examples of an amphoteric surfactant include lauryl amino propionate and lauryl dimethyl betaine. Examples of a nonionic surfactant include: polyoxyethylene glycol alkyl ethers such as polyoxyethylene lauryl ether, polyoxyethylene higher alcohol ether, and polyoxyethylene octyl phenyl ether; polyethylene glycol fatty acid esters such as polyethylene glycol monostearate; sorbitan fatty acid esters such as sorbitan monolaurate and polyoxyethylene sorbitan monolaurate; glycol fatty acid esters such as glycol monostearate; and fatty acid monoglycerides. Two or more of these may be used in combination.

The binding component of the binder is not limited to a particular one, and an organic or inorganic component can be used. Examples of the organic binding component include methylcellulose, carboxymethyl cellulose, starch, carboxymethyl starch, hydroxyethyl cellulose, hydroxypropyl cellulose, polyvinyl alcohol, silane coupling agents, acrylic resins, epoxy resins, phenolic resins, vinyl acetate, and urethane resins. Examples of the inorganic binding component include liquid glass, colloidal silica, colloidal alumina, and amino silane. The binding component preferably contains at least one selected from a silane coupling agent, an epoxy resin, and an urethane resin. The silane coupling agent has two or more reactive groups in a molecule, one of which reacts with the surface of the flaky glass, and another one of which reacts with the organic binding component and a thermoplastic resin. Accordingly, the affinity between the flaky glass and the thermoplastic resin is improved. Epoxy resins and urethane resins have a good affinity for silane coupling agents and thermoplastic resins.

The concentration of the binder is preferably adjusted using water or an alcohol as a solvent so that the components can be uniformly present on the surface of the glass filler. The concentration of the binder is preferably 1 to 10 mass%, as expressed in total solid concentration. The binder can be manufactured, for example, by appropriately adding the binding component, the surfactant, etc. to the solvent at ordinary temperature and atmospheric pressure and stirring the mixture to homogeneity.

A ratio of the binder in the granulated glass filler, i.e., a deposit ratio of the binder, is, for example, 0.1 to 2 mass% in terms of a mass ratio of solids. A deposit ratio of 0.1 mass% or more is suitable for sufficiently reducing scattering of the glass fillers. A deposit ratio of 2 mass% or less is suitable for reducing gas generation and discoloration of a resin composition at extrusion molding of the resin composition.

The method for granulating the glass filler is not limited to a particular one, and, for example, stirring granulation, fluidized bed granulation, injection granulation, or rotary granulation can be used. Specifically, a method is applicable in which the glass fillers on which an appropriate amount of the binder is deposited using a spray or the like are spread in a rotating drum or on a vibrating tray and the glass fillers are granulated while being heated to evaporate the solvent. The granular glass filler having a desired size can be manufactured by appropriately adjusting the rotational rate of the rotating drum or the vibration frequency of the vibration tray and the evaporation rate of the solvent.

The glass filler may have a surface treated with a surface treatment agent. This treatment may improve the reinforcing effect of the glass filler. Examples of the surface treatment agent include silicon coupling agents, such as γ-aminopropyltriethoxysilane, vinyltriethoxysilane, and γ-methacryloxypropyltrimethoxysilane, and titanium coupling agents. The amount of the surface treatment agent used is, for example, 0.05 to 0.20 mass% of the glass filler.

(Glass filler manufacturing method)

The glass filler is manufactured by a method including: melting the above-described glass composition; and shaping the molten glass composition into a desired glass filler. The temperature for melting the glass composition is, for example, 1400°C or higher.

(Coating on glass filler)

The glass filler may have a coating provided on a surface thereof. The coating preferably has a metal or a metal compound, particularly a metal or a metal oxide, as its main component. The term "main component" as used here also refers to a component whose content is highest on a mass basis. Examples of the metal include gold, silver, aluminum, platinum, palladium, and nickel. Examples of the metal oxide include titanium oxide, silicon dioxide, aluminum oxide, zirconium oxide, iron oxide, cobalt oxide, zinc oxide, and tin oxide. The coating can be a single-layer coating, a composite coating, or a multi-layer coating. It suffices for the coating to be formed on at least a portion of surfaces of the glass filler serving as a substrate. The coating may be formed over an entire surface of the glass filler. The thickness of the coating can be chosen as appropriate depending on the purpose of the coated glass filler. The coating can be responsible for coloring of the glass filler, adjustment of optical properties, and the like. The coloring can be achieved by a reflected color attributable to a metal coating, a color produced by plasmon resonance of metal nanoparticles forming a metal coating, an interference color attributable to a metal oxide film, or the like. The coating may be formed by vapor deposition typified by sputtering, but liquid-phase deposition is suitable for formation of the coating on the glass filler.

[Resin composition]

The resin composition of the present invention includes a thermoplastic resin as well as the glass filler of the present invention. The thermoplastic resin is not limited to a particular one, and is, for example, polyvinyl chloride, polypropylene, polyethylene, polystyrene, polyester, polyamide, polycarbonate, polybutylene, polybutylene terephthalate, or a copolymer of these. The use of polybutylene terephthalate enhances a warpage reducing effect and a dimensional stability improving effect on a molded product made by mixing polybutylene terephthalate with the glass filler.

The content of the glass fillers such as the flaky glasses in the resin composition is preferably 5 to 70 mass%. Setting the content to 5 mass% or more makes it likely that the glass filler sufficiently exhibits its function as a reinforcement. Setting the content to 70 weight% or less facilitates the glass fillers to be uniformly dispersed in the resin composition. To sufficiently reduce the mold shrinkage factor, the glass filler content is more preferably 30 mass% or more.

The resin composition may appropriately include a reinforcement other than the glass filler. For example, in applications requiring a high strength, a glass fiber may be included. In this case, the glass fiber may be added such that the glass fiber content is nearly equal to the glass filler content.

The flaky glass, the flat fiber, and the thin glass piece have relatively large specific surface areas, and are suitable for ensuring the adhesive force with the thermoplastic resin. From this point of view, the flat fiber as shown in FIG. 6 is preferable because its recessed surface shape contributes to an increase in specific surface area.

The resin composition of the present invention has a low permittivity, and is suitable for improving various properties. The improvement in various properties includes, for example: enhancement in strength, thermal resistance, and dimensional stability; decrease in linear thermal expansion coefficient and reduction in its anisotropy; and reduction in anisotropy of the shrinkage factor at molding.

[Paint]

The paint of the present invention includes the glass filler of the present invention as a constituent component. The paint is not limited to a particular one. Examples of the paint include paints for vehicles, paints for ships, paints for aircrafts, paints for buildings, paints for civil engineering structures, paints for building materials, paints for electrical appliances, paints for resin molded products, paints for paper processing, and paints for film processing. The paints for vehicles are typically paints for automobiles. The paint may be what is called, for example, a coating agent, and the application method is not limited to a particular one.

[Cosmetic]

The cosmetic of the present invention includes the glass filler of the present invention as a constituent component. The cosmetic is not limited to a particular one. Examples of the cosmetic include facial cosmetics, makeup cosmetics, and hair cosmetics. Examples of the facial cosmetics include foundations and face powders. Examples of the makeup cosmetics include eye shadows, nail enamels, eyeliners, mascaras, lipsticks, and fancy powders. The forms of the cosmetics are not limited to a particular one, and examples thereof include powder, a cake, a pencil, a stick, ointment, liquid, emulsion, and cream.

[Ink composition]

The cosmetic of the present invention includes the glass filler of the present invention as a constituent component. Examples of the ink composition include inks for writing instruments, inks for printing, and inks for inkjet.
Hereinafter, the embodiment of the present invention will be described in more detail by Examples and Comparative Examples.

(Examples 1 to 76 and Comparative Examples 1 to 5)

Common glass raw materials such as silica sand were blended according to each composition shown in Tables 1 to 13 to prepare glass raw material batches for Examples and Comparative Examples. Each batch was molten by heating it to 1500 to 1600°C using an electric furnace, and was kept molten for about 4 hours until the composition became uniform. After that, part of the molten glass (glass melt) was poured onto an iron plate, and was slowly cooled to room temperature in an electric furnace. A glass composition (sheet-shaped body; glass specimen) as a bulk was obtained in this manner.
For each obtained glass composition, the relationship between viscosity and temperature was examined by a common platinum ball-drawing method, and the working temperature was determined from the examination result. The platinum ball-drawing method is a method for measuring the viscosity of molten glass by dipping a platinum ball in the molten glass, drawing the platinum ball upward at a uniform velocity, determining the relationship between the load (friction) during the upward drawing of the platinum ball and the gravity, buoyancy, etc. acting on the platinum ball, and applying the determined relationship to the Stokes' law which states the relationship between the viscosity of a fluid and the fall velocity at which a small particle settles down in the fluid.
Each glass composition crushed to a particle diameter of 1.0 to 2.8 mm was put in a platinum boat. The glass composition in the boat was left in an electric furnace with a temperature gradient (800 to 1400°C) for 2 hours. The devitrification temperature of the glass composition was determined from the maximum temperature of the electric furnace at a location where a crystal appeared. In the case where the glass turned cloudy and no crystal was able to be observed, the maximum temperature of the electric furnace at a location where the cloudiness appeared was defined as the devitrification temperature. Here, the particle diameter is a value measured by sieving. It should be noted that varying temperatures at different places in the electric furnace (a temperature distribution in the electric furnace) was measured in advance, and the glass composition placed at a given place in the electric furnace was heated at the temperature measured in advance for the given place. The temperature difference $\Delta T$ is determined by subtracting the devitrification temperature from the working temperature.
The amount of alkali dissolution was measured according to an alkali dissolution test defined in JIS R 3502: 1995 "Test method of glass apparatus for chemical analysis". The measurement was specifically as follows. The glass specimen was crushed into particles, which were sieved to obtain particles that pass through a sieve having an opening size of 420 $\mu$m and are left on a sieve having an opening size of 250 $\mu$m. Next, particles having the same mass as that of the specific gravity of the glass specimen were weighed out from the sieved-out particles. The weighed-out particles were immersed in 50 mL of distilled water at 100°C for 1 hour, after which alkaline components in the water in which the particles had been immersed were titrated with 0.01 N sulfuric acid. The milliliters of the sulfuric acid consumed for the titration were multiplied by 0.31 to determine the milligrams of the alkaline components calculated as $Na_2O$. The determined milligrams was defined as the amount of alkali dissolution. The smaller the amount of alkali dissolution is, the higher water resistance the glass specimen has.

The permittivity at a frequency of 1 GHz was measured using a permittivity measuring apparatus by cavity resonator perturbation. The measurement temperature was 25°C, and measurement samples were each a rectangular parallelepiped having a height of 100 mm and a square base 1.5 mm on a side.

Additionally, the number of bubbles was determined in the following manner. Common glass raw materials such as silica sand were blended to prepare glass raw material batches for Examples and Comparative Examples. In an electric furnace, 150 g of each batch was molten by heating it to 1500 to 1600°C, and was kept molten for 2 hours until the composition became uniform. The melting temperature was chosen as appropriate depending on the glass composition, and was defined as a test temperature in the evaluation of the number of bubbles. After that, part of the molten glass (glass melt) was poured onto an iron plate, and was slowly cooled to room temperature in an electric furnace. A glass specimen was obtained in this manner. The number of bubbles in this glass specimen was observed using an optical microscope, and the number of bubbles per 100 g of the glass was determined. "A" represents a glass specimen having less than 4000 bubbles in 100 g of the glass, "B" represents a glass specimen having 4000 or more and less than 10000 bubbles in 100 g of the glass, "C" represents a glass specimen having 10000 or more and less than 20000 bubbles in 100 g of the glass, and "D" represents a glass specimen having more than 20000 bubbles in 100 g of the glass.

Furthermore, whether the glass composition emits light by irradiation of the glass composition with an ultraviolet lamp having a wavelength of 254 nm and the color of the emitted light were visually observed. Tables 1 to 13 show results of these measurements. The compositions of glass in Tables are all expressed in mass%.

[Table 1]

| Composition A-1 | | | | | | | | | | |
|---|---|---|---|---|---|---|---|---|---|---|
| Components (mass%) and properties | Ex. 1 | Ex. 2 | Ex. 3 | Ex. 4 | Ex. 5 | Ex. 6 | Ex. 7 | Ex. 8 | Ex. 9 | Ex. 10 |
| $SiO_2$ | 54.82 | 54.23 | 54.21 | 54.02 | 54.55 | 54.09 | 54.06 | 54.40 | 50.50 | 54.42 |
| $B_2O_3$ | 26.90 | 27.92 | 27.91 | 27.82 | 26.78 | 27.85 | 27.84 | 27.24 | 28.19 | 27.24 |
| $Al_2O_3$ | 13.71 | 12.90 | 12.89 | 12.85 | 12.87 | 12.87 | 12.86 | 12.83 | 14.34 | 12.83 |
| MgO | 3.32 | 2.93 | 3.08 | 2.25 | 2.05 | 2.60 | 2.23 | 2.15 | 3.32 | 1.95 |
| CaO | 0.23 | 0.64 | 0.22 | 1.45 | 1.89 | 1.04 | 1.39 | 1.41 | 3.18 | 1.85 |
| SrO | - | - | - | - | - | - | - | 0.30 | - | - |
| BaO | - | - | - | - | - | - | - | - | - | 0.21 |
| ZnO | - | - | 0.24 | 0.11 | - | - | - | - | - | - |
| $Li_2O$ | 0.69 | 0.69 | 0.74 | 0.69 | 0.69 | 0.64 | 0.69 | 0.73 | - | 0.69 |
| $Na_2O$ | 0.10 | 0.10 | - | 0.10 | 0.10 | 0.19 | 0.10 | - | - | 0.10 |
| $K_2O$ | - | - | - | - | - | - | - | - | - | - |
| $TiO_2$ | - | - | - | - | 0.61 | - | - | - | - | - |
| $ZrO_2$ | - | - | - | - | - | - | - | - | - | - |
| $T\text{-}Fe_2O_3$ | - | 0.12 | 0.25 | 0.25 | - | - | 0.25 | 0.25 | 0.24 | 0.25 |
| $T\text{-}SnO_2$ | 0.23 | 0.47 | 0.46 | 0.46 | 0.46 | 0.46 | 0.46 | 0.69 | 0.23 | 0.46 |
| $CeO_2$ | - | - | - | - | - | 0.26 | - | - | - | - |
| $F_2$ | - | - | - | - | - | - | 0.12 | - | - | - |
| Devitrification temperature [°C] | 1302 | 1272 | 1282 | 1237 | 1213 | 1249 | 1241 | 1308 | 1162 | 1221 |
| Working temperature [°C] | 1339 | 1322 | 1326 | 1313 | 1315 | 1315 | 1314 | 1313 | 1340 | 1318 |
| ΔT [°C] | 37 | 50 | 44 | 76 | 102 | 66 | 73 | 5 | 178 | 97 |

(continued)

| Composition A-1 | | | | | | | | | | |
|---|---|---|---|---|---|---|---|---|---|---|
| Components (mass%) and properties | Ex. 1 | Ex. 2 | Ex. 3 | Ex. 4 | Ex. 5 | Ex. 6 | Ex. 7 | Ex. 8 | Ex. 9 | Ex. 10 |
| Amount of alkali dissolution [mg] | 0.10 | 0.20 | 0.21 | 0.29 | 0.17 | 0.20 | 0.28 | 0.27 | 0.06 | 0.28 |
| Permittivity | 4.4 | 4.4 | 4.4 | 4.5 | 4.6 | 4.5 | 4.4 | 4.5 | 4.6 | 4.5 |
| Test temperature [°C] | 1600 | 1600 | 1600 | 1600 | 1600 | 1600 | 1600 | 1600 | 1600 | 1600 |
| Number of bubbles | C | B | C | C | B | B | B | B | B | B |
| Emission color | Bluish white | Bluish white | Bluish white | Bluish white | Bluish white | Bluish white | Bluish white | Bluish white | Bluish white | Bluish white |

[Table 2]

| Composition A-1 | | | | | | |
|---|---|---|---|---|---|---|
| Components (mass%) and properties | Example 11 | Example 12 | Example 13 | Example 14 | Example 15 | Example 16 |
| $SiO_2$ | 53.95 | 51.37 | 53.92 | 55.41 | 50.44 | 54.75 |
| $B_2O_3$ | 27.79 | 27.62 | 27.75 | 27.19 | 28.16 | 26.88 |
| $Al_2O_3$ | 12.84 | 14.32 | 12.82 | 12.64 | 14.32 | 13.70 |
| MgO | 1.96 | 2.87 | 2.39 | 3.27 | 3.28 | 3.32 |
| CaO | 1.85 | 2.85 | 2.00 | 0.23 | 3.14 | 0.23 |
| SrO | - | - | - | - | - | - |
| BaO | - | - | - | - | - | - |
| ZnO | 0.11 | - | - | - | - | - |
| $Li_2O$ | 0.69 | 0.18 | 0.32 | 0.69 | - | 0.65 |
| $Na_2O$ | 0.10 | 0.09 | 0.10 | 0.10 | - | 0.10 |
| $K_2O$ | - | - | - | - | - | 0.15 |
| $TiO_2$ | - | - | - | - | - | - |
| $ZrO_2$ | - | - | - | - | 0.19 | - |
| $T-Fe_2O_3$ | 0.25 | 0.24 | 0.24 | - | 0.24 | - |
| $T-SnO_2$ | 0.46 | 0.46 | 0.46 | 0.47 | 0.23 | 0.23 |
| $CeO_2$ | - | - | - | - | - | - |
| $F_2$ | - | - | - | - | - | - |
| Devitrification temperature [°C] | 1221 | 1259 | 1323 | 1272 | 1160 | 1305 |
| Working temperature [°C] | 1309 | 1332 | 1326 | 1343 | 1340 | 1342 |
| ΔT [°C] | 88 | 73 | 3 | 71 | 180 | 37 |
| Amount of alkali dissolution [mg] | 0.32 | 0.08 | 0.18 | 0.14 | 0.06 | 0.10 |
| Permittivity | 4.5 | 4.6 | 4.4 | 4.4 | 4.6 | 4.4 |
| Test temperature [°C] | 1600 | 1600 | 1600 | 1600 | 1600 | 1600 |
| Number of bubbles | C | A | C | B | C | C |

(continued)

| Components (mass%) and properties | Example 11 | Example 12 | Example 13 | Example 14 | Example 15 | Example 16 |
|---|---|---|---|---|---|---|
| Emission color | Bluish white | Bluish white | Bluish white | Bluish white | Bluish white | Bluish white |

[Table 3]

| Composition A-2 | | | | | | |
|---|---|---|---|---|---|---|
| Components (mass%) and properties | Example 17 | Example 18 | Example 19 | Example 20 | Example 21 | Example 22 |
| $SiO_2$ | 61.35 | 59.73 | 62.19 | 61.57 | 62.11 | 60.14 |
| $B_2O_3$ | - | - | - | - | 0.57 | 1.67 |
| $Al_2O_3$ | 19.60 | 19.71 | 19.87 | 19.68 | 20.00 | 21.00 |
| MgO | 10.27 | 11.71 | 14.34 | 11.68 | 15.88 | 10.17 |
| CaO | 7.19 | 7.21 | 1.81 | 5.39 | - | 5.27 |
| SrO | - | - | - | - | - | - |
| BaO | - | - | - | - | - | - |
| ZnO | - | - | - | - | - | - |
| $Li_2O$ | - | - | - | - | - | - |
| $Na_2O$ | 0.80 | 0.60 | 0.61 | 0.60 | 0.61 | 0.79 |
| $K_2O$ | 0.30 | 0.31 | 0.31 | 0.31 | 0.31 | - |
| $TiO_2$ | - | - | 0.13 | - | - | - |
| $ZrO_2$ | - | - | - | - | - | - |
| $T\text{-}Fe_2O_3$ | - | - | - | - | 0.26 | - |
| $T\text{-}SnO_2$ | 0.49 | 0.73 | 0.74 | 0.49 | 0.25 | 0.96 |
| $CeO_2$ | - | - | - | 0.28 | - | - |
| $F_2$ | - | - | - | - | - | - |
| Devitrification temperature [°C] | 1242 | 1268 | 1337 | 1259 | 1320 | 1282 |
| Working temperature [°C] | 1352 | 1328 | 1340 | 1349 | 1334 | 1345 |
| $\Delta T$ [°C] | 110 | 60 | 3 | 90 | 14 | 63 |
| Amount of alkali dissolution [mg] | - | - | - | - | - | - |
| Permittivity | - | - | - | - | - | - |
| Test temperature [°C] | 1550 | 1550 | 1550 | 1550 | 1550 | 1550 |
| Number of bubbles | A | A | A | A | A | A |
| Emission color | Bluish white | Bluish white | Bluish white | Bluish white | Bluish white | Bluish white |

[Table 4]

| Composition A-3 | | | | | | |
|---|---|---|---|---|---|---|
| Components (mass%) and properties | Example 23 | Example 24 | Example 25 | Example 26 | Example 27 | Example 28 |
| $SiO_2$ | 66.55 | 67.25 | 64.61 | 66.78 | 67.52 | 67.22 |
| $B_2O_3$ | 4.65 | 4.70 | 6.92 | 4.67 | 4.72 | 4.70 |
| $Al_2O_3$ | 3.99 | 4.03 | 3.99 | 4.00 | 4.04 | 4.03 |
| MgO | 2.49 | 3.20 | 3.03 | 3.06 | 3.18 | 3.10 |
| CaO | 6.31 | 8.11 | 7.67 | 7.76 | 8.05 | 7.86 |

(continued)

| Composition A-3 | | | | | | |
|---|---|---|---|---|---|---|
| Components (mass%) and properties | Example 23 | Example 24 | Example 25 | Example 26 | Example 27 | Example 28 |
| SrO | - | - | - | - | - | - |
| BaO | - | - | - | - | - | - |
| ZnO | 3.58 | - | - | - | - | - |
| $Li_2O$ | 0.58 | - | - | - | 0.59 | 0.59 |
| $Na_2O$ | 10.10 | 11.43 | 11.82 | 11.35 | 10.24 | 10.20 |
| $K_2O$ | 0.77 | 0.78 | - | 0.77 | 0.78 | 0.78 |
| $TiO_2$ | - | - | - | 0.13 | - | - |
| $ZrO_2$ | - | - | - | - | - | - |
| $T\text{-}Fe_2O_3$ | - | - | - | - | 0.13 | - |
| $T\text{-}SnO_2$ | 0.98 | 0.50 | 1.96 | 1.48 | 0.75 | 1.24 |
| $CeO_2$ | - | - | - | - | - | 0.28 |
| $F_2$ | - | - | - | - | - | - |
| Devitrification temperature [°C] | 984 | 1025 | 1003 | 1022 | 1028 | 1025 |
| Working temperature [°C] | 1166 | 1182 | 1140 | 1183 | 1169 | 1166 |
| $\Delta T$ [°C] | 182 | 157 | 137 | 161 | 141 | 141 |
| Amount of alkali dissolution [mg] | - | - | - | - | - | - |
| Permittivity | - | - | - | - | - | - |
| Test temperature [°C] | 1500 | 1500 | 1500 | 1500 | 1500 | 1500 |
| Number of bubbles | A | A | A | A | A | A |
| Emission color | Bluish white | Bluish white | Bluish white | Bluish white | Bluish white | Bluish white |

[Table 5]

| Composition A-4 | | | | | | |
|---|---|---|---|---|---|---|
| Components (mass%) and properties | Example 29 | Example 30 | Example 31 | Example 32 | Example 33 | Example 34 |
| $SiO_2$ | 54.46 | 54.36 | 54.07 | 54.98 | 54.85 | 54.45 |
| $B_2O_3$ | 5.91 | 5.90 | 5.86 | 5.96 | 5.95 | 5.90 |
| $Al_2O_3$ | 14.42 | 14.39 | 14.31 | 14.55 | 14.52 | 14.42 |
| MgO | 0.39 | 0.39 | 0.38 | 3.51 | 0.39 | 0.39 |
| CaO | 23.08 | 22.86 | 22.48 | 18.78 | 23.33 | 23.07 |
| SrO | - | - | - | - | - | - |
| BaO | - | - | - | - | - | - |
| ZnO | - | - | - | - | - | - |
| $Li_2O$ | - | - | - | - | - | - |
| $Na_2O$ | 0.49 | 0.49 | 0.48 | 0.49 | - | 0.49 |
| $K_2O$ | 0.30 | 0.30 | 0.29 | 0.30 | - | 0.30 |
| $TiO_2$ | - | 0.13 | - | - | - | - |
| $ZrO_2$ | - | - | - | - | - | - |
| $T\text{-}Fe_2O_3$ | - | - | 0.25 | - | - | - |
| $T\text{-}SnO_2$ | 0.95 | 1.18 | 1.88 | 1.43 | 0.48 | 0.71 |
| $CeO_2$ | - | - | - | - | - | 0.27 |
| $F_2$ | - | - | - | - | 0.48 | - |

(continued)

| Composition A-4 | | | | | | |
| --- | --- | --- | --- | --- | --- | --- |
| Components (mass%) and properties | Example 29 | Example 30 | Example 31 | Example 32 | Example 33 | Example 34 |
| Devitrification temperature [°C] | 1056 | 1062 | 1067 | 1119 | 1060 | 1105 |
| Working temperature [°C] | 1202 | 1202 | 1207 | 1212 | 1207 | 1196 |
| ΔT [°C] | 146 | 140 | 140 | 93 | 147 | 91 |
| Amount of alkali dissolution [mg] | - | - | - | - | - | - |
| Permittivity | - | - | - | - | - | - |
| Test temperature [°C] | 1500 | 1500 | 1500 | 1500 | 1500 | 1500 |
| Number of bubbles | A | A | A | A | A | A |
| Emission color | Bluish white | Bluish white | Bluish white | Bluish white | Bluish white | Bluish white |

[Table 6]

| Composition A-5 | | | | | | |
| --- | --- | --- | --- | --- | --- | --- |
| Components (mass%) and properties | Example 35 | Example 36 | Example 37 | Example 38 | Example 39 | Example 40 |
| $SiO_2$ | 59.93 | 60.99 | 61.28 | 60.39 | 64.55 | 63.02 |
| $B_2O_3$ | - | - | - | - | - | 1.14 |
| $Al_2O_3$ | 11.17 | 11.09 | 11.15 | 11.26 | 11.29 | 11.20 |
| MgO | 3.41 | 3.10 | 3.18 | 3.28 | 2.48 | 1.99 |
| CaO | 24.50 | 22.22 | 22.97 | 23.53 | 17.78 | 19.84 |
| SrO | - | - | - | - | - | - |
| BaO | - | - | - | - | - | - |
| ZnO | - | - | - | - | - | - |
| $Li_2O$ | - | 0.14 | - | 0.79 | 2.37 | 1.57 |
| $Na_2O$ | - | 0.30 | 0.38 | - | - | - |
| $K_2O$ | - | 0.44 | 0.29 | - | - | - |
| $TiO_2$ | - | 0.25 | - | - | - | - |
| $ZrO_2$ | - | - | - | - | - | - |
| $T\text{-}Fe_2O_3$ | - | - | 0.26 | - | - | - |
| $T\text{-}SnO_2$ | 0.99 | 1.47 | 0.49 | 0.75 | 1.25 | 1.24 |
| $CeO_2$ | - | - | - | - | 0.28 | - |
| $F_2$ | - | - | - | - | - | - |
| Devitrification temperature [°C] | 1215 | 1206 | 1217 | 1212 | 1175 | 1176 |
| Working temperature [°C] | 1239 | 1247 | 1254 | 1215 | 1228 | 1230 |
| ΔT [°C] | 24 | 41 | 37 | 3 | 53 | 54 |
| Amount of alkali dissolution [mg] | - | - | - | - | - | - |
| Permittivity | - | - | - | - | - | - |
| Test temperature [°C] | 1500 | 1500 | 1500 | 1500 | 1500 | 1500 |
| Number of bubbles | A | A | A | A | A | A |
| Emission color | Bluish white | Bluish white | Bluish white | Bluish white | Bluish white | Bluish white |

[Table 7]

| Composition A-6 | | | | | | |
|---|---|---|---|---|---|---|
| Components (mass%) and properties | Example 41 | Example 42 | Example 43 | Example 44 | Example 45 | Example 46 |
| $SiO_2$ | 65.17 | 65.84 | 65.22 | 66.60 | 65.04 | 65.11 |
| $B_2O_3$ | - | - | - | - | - | 1.13 |
| $Al_2O_3$ | 11.05 | 11.08 | 11.05 | 10.95 | 11.03 | 9.22 |
| MgO | 2.60 | 2.23 | 2.19 | 2.08 | 2.61 | 2.53 |
| CaO | 17.01 | 17.06 | 18.61 | 15.36 | 16.17 | 16.60 |
| SrO | - | - | - | - | - | - |
| BaO | - | - | - | - | - | - |
| ZnO | - | - | - | - | 1.34 | - |
| $Li_2O$ | 1.70 | 2.30 | 1.66 | 1.69 | 1.70 | - |
| $Na_2O$ | 1.14 | - | 0.27 | 1.13 | 1.14 | 3.65 |
| $K_2O$ | 0.34 | - | 0.26 | 0.34 | 0.34 | 0.26 |
| $TiO_2$ | - | - | - | 0.13 | - | - |
| $ZrO_2$ | - | - | - | - | - | - |
| $T-Fe_2O_3$ | - | - | - | - | 0.13 | - |
| $T-SnO_2$ | 0.99 | 1.49 | 0.74 | 1.72 | 0.50 | 1.22 |
| $CeO_2$ | - | - | - | - | - | 0.28 |
| $F_2$ | - | - | - | - | - | - |
| Devitrification temperature [°C] | 1183 | 1189 | 1156 | 1173 | 1159 | 1201 |
| Working temperature [°C] | 1260 | 1244 | 1260 | 1291 | 1262 | 1260 |
| ΔT [°C] | 77 | 55 | 104 | 118 | 103 | 59 |
| Amount of alkali dissolution [mg] | - | - | - | - | - | - |
| Permittivity | - | - | - | - | - | - |
| Test temperature [°C] | 1500 | 1500 | 1500 | 1500 | 1500 | 1500 |
| Number of bubbles | A | A | A | A | A | A |
| Emission color | Bluish white | Bluish white | Bluish white | Bluish white | Bluish white | Bluish white |

[Table 8]

| Composition A-7 | | | | | | |
|---|---|---|---|---|---|---|
| Components (mass%) and properties | Example 47 | Example 48 | Example 49 | Example 50 | Example 51 | Example 52 |
| $SiO_2$ | 62.90 | 65.73 | 66.65 | 65.61 | 63.88 | 64.58 |
| $B_2O_3$ | - | - | - | - | 1.14 | - |
| $Al_2O_3$ | 10.82 | 11.06 | 9.44 | 11.04 | 10.99 | 10.94 |
| MgO | 2.74 | 1.99 | 2.13 | 2.00 | 2.13 | 2.11 |
| CaO | 14.60 | 15.21 | 15.77 | 15.34 | 15.72 | 14.66 |
| SrO | - | - | - | - | - | - |
| BaO | - | - | - | - | - | - |
| ZnO | - | - | - | - | - | 1.33 |
| $Li_2O$ | - | 3.03 | 2.31 | 2.29 | 1.79 | 1.78 |
| $Na_2O$ | 7.44 | - | 2.20 | 1.87 | 2.87 | 2.86 |
| $K_2O$ | 0.53 | 0.99 | - | 0.48 | 0.48 | 0.48 |

(continued)

| Composition A-7 | | | | | | |
|---|---|---|---|---|---|---|
| Components (mass%) and properties | Example 47 | Example 48 | Example 49 | Example 50 | Example 51 | Example 52 |
| $TiO_2$ | - | - | - | 0.13 | - | - |
| $ZrO_2$ | - | - | - | - | - | - |
| $T-Fe_2O_3$ | - | - | - | - | 0.26 | - |
| $T-SnO_2$ | 0.97 | 1.99 | 1.50 | 1.24 | 0.74 | 0.98 |
| $CeO_2$ | - | - | - | - | - | 0.28 |
| $F_2$ | - | - | - | - | - | - |
| Devitrification temperature [°C] | 1229 | 1184 | 1179 | 1159 | 1151 | 1142 |
| Working temperature [°C] | 1270 | 1229 | 1234 | 1243 | 1221 | 1249 |
| $\Delta T$ [°C] | 41 | 45 | 55 | 84 | 70 | 107 |
| Amount of alkali dissolution [mg] | - | - | - | - | - | - |
| Permittivity | - | - | - | - | - | - |
| Test temperature [°C] Number of bubbles | 1500 A | 1500 A | 1500 A | 1500 A | 1500 A | 1500 A |
| Emission color | Bluish white | Bluish white | Bluish white | Bluish white | Bluish white | Bluish white |

[Table 9]

| Composition A-8 | | | | | | |
|---|---|---|---|---|---|---|
| Components (mass%) and properties | Example 53 | Example 54 | Example 55 | Example 56 | Example 57 | Example 58 |
| $SiO_2$ | 63.38 | 66.01 | 62.54 | 62.74 | 62.85 | 62.98 |
| $B_2O_3$ | - | 1.26 | - | - | - | - |
| $Al_2O_3$ | 10.91 | 9.01 | 10.76 | 10.80 | 10.81 | 10.84 |
| MgO | 3.12 | 3.01 | 3.64 | 2.67 | 2.64 | 2.70 |
| CaO | 10.57 | 7.75 | 9.37 | 11.41 | 11.74 | 11.97 |
| SrO | - | - | - | - | - | - |
| BaO | - | - | - | - | - | - |
| ZnO | - | - | - | 0.65 | - | - |
| $Li_2O$ | 1.04 | 0.55 | - | 0.50 | 0.50 | 0.50 |
| $Na_2O$ | 9.19 | 10.14 | 11.20 | 9.24 | 9.25 | 9.27 |
| $K_2O$ | 0.81 | 0.81 | 0.80 | 0.74 | 0.74 | 0.75 |
| $TiO_2$ | - | - | - | - | 0.26 | - |
| $ZrO_2$ | - | - | - | - | - | - |
| $T-Fe_2O_3$ | - | - | - | - | - | 0.26 |
| $T-SnO_2$ | 0.98 | 1.46 | 1.69 | 0.97 | 1.21 | 0.73 |
| $CeO_2$ | - | - | - | 0.28 | - | - |
| $F_2$ | - | - | - | - | - | - |
| Devitrification temperature [°C] | 1152 | 1160 | 1232 | 1171 | 1192 | 1169 |
| Working temperature [°C] | 1228 | 1266 | 1266 | 1247 | 1243 | 1247 |
| $\Delta T$ [°C] | 76 | 106 | 34 | 76 | 51 | 78 |

(continued)

| Composition A-8 | | | | | | |
|---|---|---|---|---|---|---|
| Components (mass%) and properties | Example 53 | Example 54 | Example 55 | Example 56 | Example 57 | Example 58 |
| Amount of alkali dissolution [mg] | - | - | - | - | - | - |
| Permittivity | - | - | - | - | - | - |
| Test temperature [°C] Number of bubbles | 1500 A | 1500 A | 1500 A | 1500 A | 1500 A | 1500 A |
| Emission color | Bluish white | Bluish white | Bluish white | Bluish white | Bluish white | Bluish white |

[Table 10]

| Composition A-9 | | | | | | |
|---|---|---|---|---|---|---|
| Components (mass%) and properties | Example 59 | Example 60 | Example 61 | Example 62 | Example 63 | Example 64 |
| $SiO_2$ | 65.55 | 64.45 | 65.65 | 66.11 | 64.65 | 65.55 |
| $B_2O_3$ | - | - | 1.12 | - | - | - |
| $Al_2O_3$ | 9.66 | 8.12 | 8.03 | 7.96 | 8.02 | 9.65 |
| MgO | 2.91 | 3.68 | 2.84 | - | 3.29 | 2.84 |
| CaO | 7.27 | 9.19 | 7.11 | 11.15 | 7.38 | 7.10 |
| SrO | - | - | - | - | - | - |
| BaO | - | - | - | - | - | - |
| ZnO | - | - | - | - | 1.31 | - |
| $Li_2O$ | - | - | - | - | - | 0.24 |
| $Na_2O$ | 12.97 | 13.14 | 12.99 | 12.88 | 12.98 | 12.90 |
| $K_2O$ | 0.67 | 0.68 | 0.67 | 0.66 | 0.67 | - |
| $TiO_2$ | - | - | 0.13 | - | - | - |
| $ZrO_2$ | - | - | - | - | - | - |
| $T\text{-}Fe_2O_3$ | - | - | - | - | - | 0.26 |
| $T\text{-}SnO_2$ | 0.97 | 0.74 | 1.46 | 0.96 | 1.70 | 1.46 |
| $CeO_2$ | - | - | - | 0.28 | - | - |
| $F_2$ | - | - | - | - | - | - |
| Devitrification temperature [°C] | 1097 | 1109 | 1108 | 1161 | 1160 | 1136 |
| Working temperature [°C] | 1272 | 1224 | 1246 | 1240 | 1245 | 1279 |
| $\Delta T$ [°C] | 175 | 115 | 138 | 79 | 85 | 143 |
| Amount of alkali dissolution [mg] | - | - | - | - | - | - |
| Permittivity | - | - | - | - | - | - |
| Test temperature [°C] Number of bubbles | 1500 B | 1500 A | 1500 A | 1500 A | 1500 A | 1500 B |
| Emission color | Bluish white | Bluish white | Bluish white | Bluish white | Bluish white | Bluish white |

[Table 11]

| Composition A-10 | | | | | | |
|---|---|---|---|---|---|---|
| Components (mass%) and properties | Example 65 | Example 66 | Example 67 | Example 68 | Example 69 | Example 70 |
| $SiO_2$ | 67.57 | 62.47 | 65.00 | 65.50 | 65.98 | 66.01 |
| $B_2O_3$ | 13.29 | 18.67 | 14.14 | 14.14 | 14.14 | 14.15 |
| $Al_2O_3$ | 7.17 | 7.12 | 7.77 | 7.78 | 7.78 | 7.78 |
| MgO | 0.03 | 0.07 | 0.42 | 0.30 | 0.02 | 0.08 |
| CaO | 0.01 | 0.04 | 0.24 | 0.05 | - | - |
| SrO | - | - | - | - | - | - |
| BaO | - | - | - | - | - | - |
| ZnO | - | - | - | - | - | - |
| $Li_2O$ | 0.30 | 0.30 | - | - | - | - |
| $Na_2O$ | 10.37 | 10.31 | 10.71 | 10.71 | 10.71 | 10.72 |
| $K_2O$ | 0.79 | 0.78 | 0.54 | 0.54 | 0.54 | 0.54 |
| $TiO_2$ | - | - | - | - | 0.12 | - |
| $ZrO_2$ | - | - | - | - | - | - |
| $T\text{-}Fe_2O_3$ | - | - | - | - | - | 0.25 |
| $T\text{-}SnO_2$ | 0.47 | 0.24 | 1.18 | 0.71 | 0.71 | 0.47 |
| $CeO_2$ | - | - | - | 0.27 | - | - |
| $F_2$ | - | - | - | - | - | - |
| Devitrification temperature [°C] | 958 | 867 | 887 | 876 | 918 | 870 |
| Working temperature [°C] | 1264 | 1210 | 1254 | 1266 | 1267 | 1273 |
| ΔT [°C] | 306 | 343 | 367 | 390 | 349 | 403 |
| Amount of alkali dissolution [mg] | - | - | - | - | - | - |
| Permittivity | - | - | - | - | - | - |
| Test temperature [°C] | 1600 | 1600 | 1600 | 1600 | 1600 | 1600 |
| Number of bubbles | B | A | A | A | A | A |
| Emission color | Bluish white | Bluish white | Bluish white | Bluish white | Bluish white | Bluish white |

[Table 12]

| Composition A-12 | | | | | | |
|---|---|---|---|---|---|---|
| Components (mass%) and properties | Example 71 | Example 72 | Example 73 | Example 74 | Example 75 | Example 76 |
| $SiO_2$ | 69.31 | 68.47 | 70.43 | 68.35 | 69.59 | 69.37 |
| $B_2O_3$ | - | - | - | - | 0.57 | - |
| $Al_2O_3$ | 1.46 | 1.45 | - | 2.28 | 0.63 | 1.46 |
| MgO | 2.50 | 2.65 | 2.70 | 2.65 | 2.74 | 2.71 |
| CaO | 6.24 | 6.63 | 6.74 | 6.60 | 6.86 | 6.78 |
| SrO | - | - | - | - | - | - |
| BaO | - | - | - | - | - | - |
| ZnO | - | - | - | - | - | - |
| $Li_2O$ | 1.95 | - | 0.98 | 0.97 | 0.98 | 0.98 |
| $Na_2O$ | 9.08 | 12.97 | 11.15 | 11.03 | 11.15 | 11.12 |
| $K_2O$ | 0.68 | 0.67 | 0.68 | 0.67 | 0.68 | 0.68 |
| $TiO_2$ | - | - | - | - | - | 0.13 |

(continued)

| Composition A-12 | | | | | | |
|---|---|---|---|---|---|---|
| Components (mass%) and properties | Example 71 | Example 72 | Example 73 | Example 74 | Example 75 | Example 76 |
| $ZrO_2$ | 8.04 | 5.95 | 6.05 | 5.99 | 6.05 | 6.03 |
| $T-Fe_2O_3$ | - | - | - | - | 0.26 | - |
| $T-SnO_2$ | 0.74 | 1.21 | 0.99 | 1.46 | 0.49 | 0.74 |
| $CeO_2$ | - | - | 0.28 | - | - | - |
| $F_2$ | - | - | - | - | - | - |
| Devitrification temperature [°C] | 1005 | 1080 | 1008 | 1049 | 1173 | 1003 |
| Working temperature [°C] | 1231 | 1258 | 1225 | 1240 | 1230 | 1258 |
| $\Delta T$ [°C] | 226 | 178 | 217 | 191 | 57 | 255 |
| Amount of alkali dissolution [mg] | - | - | - | - | - | - |
| Permittivity | - | - | - | - | - | - |
| Test temperature [°C] Number of bubbles | 1550 A | 1550 A | 1550 A | 1550 A | 1550 A | 1550 A |
| Emission color | Bluish white | Bluish white | Bluish white | Bluish white | Bluish white | Bluish white |

[Table 13]

| Components (mass%) and properties | Comparative Example 1 | Comparative Example 2 | Comparative Example 3 | Comparative Example 4 | Comparative Example 5 |
|---|---|---|---|---|---|
| $SiO_2$ | 74.20 | 55.12 | 54.15 | 54.08 | 53.38 |
| $B_2O_3$ | 22.00 | 26.83 | 27.88 | 26.32 | 27.71 |
| $Al_2O_3$ | 0.30 | 12.89 | 12.88 | 12.65 | 12.80 |
| MgO | - | 2.55 | 3.12 | 2.06 | 2.46 |
| CaO | 0.50 | 2.33 | 1.44 | 1.88 | 2.24 |
| SrO | - | - | - | - | - |
| BaO | - | - | - | - | - |
| ZnO | - | - | - | - | - |
| $Li_2O$ | 0.50 | 0.18 | 0.18 | 0.18 | 0.18 |
| $Na_2O$ | 1.00 | 0.10 | 0.10 | 0.09 | 0.09 |
| $K_2O$ | 1.50 | - | - | - | - |
| $TiO_2$ | - | - | - | - | 0.61 |
| $ZrO_2$ | - | - | - | - | - |
| $T-Fe_2O_3$ | - | - | 0.25 | - | - |
| $T-SnO_2$ | - | - | - | 2.74 | - |
| $CeO_2$ | - | - | - | - | 0.53 |
| $F_2$ | - | - | - | - | - |
| Devitrification temperature [°C] | - | 1240 | 1278 | > 1343 | 1226 |
| Working temperature [°C] | - | 1343 | 1332 | 1343 | 1310 |
| $\Delta T$ [°C] | - | 103 | 54 | < 0 | 84 |
| Amount of alkali dissolution [mg] | 0.45 | 0.21 | 0.32 | 0.35 | 0.27 |

(continued)

| Components (mass%) and properties | Comparative Example 1 | Comparative Example 2 | Comparative Example 3 | Comparative Example 4 | Comparative Example 5 |
|---|---|---|---|---|---|
| Permittivity | - | 4.4 | 4.4 | 4.4 | 4.5 |
| Test temperature [°C] | 1600 | 1600 | 1600 | 1600 | 1600 |
| Number of bubbles | D | D | D | A | D |
| Emission color | - | - | - | Bluish white | - |

The temperature differences $\Delta T$ (working temperature - devitrification temperature) of the glass compositions obtained in Examples 1 to 76 are 3°C to 182°C. The amounts of alkali dissolution of the glass compositions obtained in Examples 1 to 16 are 0.06 to 0.32 mg. The glass compositions obtained in Examples 1 to 16 have a permittivity of 4.4 to 4.6 at a frequency of 1 GHz. The number of bubbles in each the glass compositions obtained in Examples 1 to 76 is A to C. For each of the glass compositions obtained in Examples 1 to 76, emission of light by ultraviolet was observed.

Meanwhile, in the glass composition obtained in Comparative Example 1, the $T\text{-}SnO_2$ content is out of the ranges of the composition ratios specified in the present invention. Because of this, the number of bubbles in the glass composition obtained in Comparative Example 1 is D, and is larger than those of the glass compositions obtained in Examples 1 to 76. Besides, for the glass composition obtained in Comparative Example 1, emission of light by ultraviolet was not observed.

In the glass composition obtained in Comparative Example 2, the $T\text{-}SnO_2$ content is out of the ranges of the composition ratios specified in the present invention. Because of this, the number of bubbles in the glass composition obtained in Comparative Example 2 is D, and is larger than those of the glass compositions obtained in Examples 1 to 76. Besides, for the glass composition obtained in Comparative Example 2, emission of light by ultraviolet was not observed.

In the glass composition obtained in Comparative Example 3, the $T\text{-}SnO_2$ content is out of the ranges of the composition ratios specified in the present invention. Because of this, the number of bubbles in the glass composition obtained in Comparative Example 3 is D, and is larger than those of the glass compositions obtained in Examples 1 to 76. Besides, for the glass composition obtained in Comparative Example 3, emission of light by ultraviolet was not observed.

In the glass composition obtained in Comparative Example 4, the $T\text{-}SnO_2$ content is out of the ranges of the composition ratios specified in the present invention. Because of this, the temperature difference $\Delta T$ of the glass composition obtained in Comparative Example 4 is less than 0°C, which is smaller than those of the glass compositions obtained in Examples 1 to 76.

In the glass composition obtained in Comparative Example 5, the $T\text{-}SnO_2$ content is out of the ranges of the composition ratios specified in the present invention. Because of this, the number of bubbles in the glass composition obtained in Comparative Example 5 is D, and is larger than those of the glass compositions obtained in Examples 1 to 76. Besides, for the glass composition obtained in Comparative Example 5, emission of light by ultraviolet was not observed.

**Claims**

1. A glass composition, comprising tin oxide, wherein
a content of the tin oxide is, in mass%, $0.1 \leq T\text{-}SnO_2 \leq 2.5$, where $T\text{-}SnO_2$ represents total tin oxide calculated as $SnO_2$.

2. The glass composition according to claim 1, further comprising the following components, in mass%:

$$45 \leq SiO_2 \leq 80;$$

$$10 \leq B_2O_3 \leq 40;$$

$$0.1 \leq Al_2O_3 \leq 20;$$

$$0.1 \leq (MgO + CaO) \leq 10;$$

and

$$0 \leq (Li_2O + Na_2O + K_2O) \leq 5,$$

wherein
$MgO/(MgO + CaO) > 0.5$ is satisfied on a mass basis.

3. The glass composition according to claim 2, wherein $45 \leq SiO_2 \leq 65$ in mass% is satisfied.

4. The glass composition according to claim 2, wherein $20 \leq B_2O_5 \leq 40$ in mass% is satisfied.

5. The glass composition according to claim 2, wherein $5 \leq Al_2O_5 \leq 20$ in mass% is satisfied.

6. The glass composition according to claim 2, wherein $0.1 \leq (MgO + CaO) < 5$ in mass% is satisfied.

7. The glass composition according to claim 2, wherein $0.1 \leq (Li_2O + Na_2O + K_2O) \leq 5$ in mass% is satisfied.

8. The glass composition according to claim 2, wherein $0.1 \leq Li_2O \leq 5$ in mass% is satisfied.

9. The glass composition according to claim 2, wherein $0 \leq P_2O_5 \leq 5$ in mass% is satisfied.

10. The glass composition according to claim 2, wherein $0 \leq F_2 \leq 1$ in mass% is satisfied.

11. The glass composition according to claim 1, further comprising the following components, in mass%:

$$50 \leq SiO_2 \leq 75;$$

$$15 \leq Al_2O_3 \leq 30;$$

$$5 \leq MgO + CaO \leq 25;$$

and

$$0 \leq (Li_2O + Na_2O + K_2O) \leq 4.$$

12. The glass composition according to claim 1, further comprising the following components, in mass%:

$$60 \leq SiO_2 \leq 75;$$

$$2 \leq B_2O_3 \leq 8;$$

$$2 \leq Al_2O_3 \leq 8;$$

$$5 < B_2O_3 + Al_2O_3 \leq 15;$$

$$3 \leq CaO \leq 20;$$

$$6 \leq Na_2O \leq 20;$$

and

$$9 \leq (Li_2O + Na_2O + K_2O) \leq 20.$$

13. The glass composition according to claim 1, further comprising the following components, in mass%:

$$50 \leq SiO_2 \leq 60;$$

$$2 \leq B_2O_3 \leq 15;$$

$$10 \leq Al_2O_3 \leq 20;$$

$$15 \leq CaO \leq 30;$$

and

$$0 \leq (Li_2O + Na_2O + K_2O) \leq 2.$$

14. The glass composition according to claim 1, further comprising the following components, in mass%:

$$57 \leq SiO_2 \leq 65;$$

$$8 \leq Al_2O_3 \leq 15;$$

$$1 \leq MgO \leq 5;$$

$$15 \leq CaO \leq 30;$$

and

$$0 \leq (Li_2O + Na_2O + K_2O) \leq 4.$$

15. The glass composition according to claim 1, further comprising the following components, in mass%:

$$65 < SiO_2 \leq 70;$$

$$5 \le Al_2O_3 \le 15;$$

$$1 \le MgO \le 10;$$

$$10 \le CaO \le 25;$$

and

$$0 \le (Li_2O + Na_2O + K_2O) \le 4.$$

16. The glass composition according to claim 1, further comprising the following components, in mass%:

$$60 \le SiO_2 \le 70;$$

$$5 \le Al_2O_3 \le 15;$$

$$1 \le MgO \le 10;$$

$$10 \le CaO \le 25;$$

and

$$4 < (Li_2O + Na_2O + K_2O) < 9.$$

17. The glass composition according to claim 1, further comprising the following components, in mass%:

$$60 \le SiO_2 \le 75;$$

$$5 < Al_2O_3 \le 15;$$

$$5 \le CaO \le 20;$$

$$6 \le Na_2O \le 13;$$

and

$$9 \le (Li_2O + Na_2O + K_2O) \le 13.$$

18. The glass composition according to claim 1, further comprising the following components, in mass%:

$$60 \le SiO_2 \le 75;$$

$$5 < Al_2O_3 \leq 15;$$

$$3 \leq CaO \leq 15;$$

$$9 \leq Na_2O \leq 20;$$

and

$$13 < (Li_2O + Na_2O + K_2O) \leq 20.$$

**19.** The glass composition according to claim 1, further comprising the following components, in mass%:

$$60 \leq SiO_2 \leq 80;$$

$$5 \leq B_2O_3 \leq 20;$$

$$5 \leq Al_2O_3 \leq 15;$$

$$0.1 \leq (MgO + CaO) < 1;$$

and

$$9 < Na_2O < 13.$$

**20.** The glass composition according to claim 1, further comprising the following components, in mass%:

$$50 \leq SiO_2 \leq 75;$$

$$0.1 \leq (MgO + CaO) \leq 20;$$

$$9 \leq (Li_2O + Na_2O + K_2O) \leq 20;$$

and

$$5 \leq ZrO_2 \leq 20.$$

**21.** The glass composition according to claim 1, wherein $0.1 \leq CeO_2 \leq 5$ in mass% is satisfied.

**22.** The glass composition according to claim 1, wherein when a temperature at which a viscosity of the glass composition is 1000 dPa•sec is defined as a working temperature, the working temperature is 1450°C or lower.

**23.** The glass composition according to claim 1, wherein when a temperature at which a viscosity of the glass composition is 1000 dPa•sec is defined as a working temperature, a temperature difference $\Delta T$ determined by subtracting a devitrification temperature from the working temperature is 0°C or more.

24. The glass composition according to claim 1, wherein an amount of alkali dissolution measured for the glass composition according to an alkali dissolution test defined in JIS R 3502: 1995 is 0.001 to 0.40 mg.

25. The glass composition according to claim 1, having a permittivity of 5.0 or less at a frequency of 1 GHz.

26. A glass fiber formed of the glass composition according to any one of claims 11 to 25.

27. A glass filler formed of the glass composition according to any one of claims 1 to 25.

28. The glass filler according to claim 27, being at least one selected from the group consisting of a flaky glass, a chopped strand, a milled fiber, glass powder, a glass bead, a flat fiber, and a thin glass piece.

29. The glass filler according to claim 27, being a flaky glass.

30. The glass filler according to claim 27, being a chopped strand.

31. The glass filler according to claim 27, being a milled fiber.

32. The glass filler according to claim 27, being glass powder.

33. The glass filler according to claim 27, being a glass bead.

34. The glass filler according to claim 27, being a flat fiber.

35. The glass filler according to claim 27, being a thin glass piece.

36. A coated glass filler, comprising:

   the glass filler according to any one of claims 27 to 35; and
   a coating provided on a surface of the glass filler, wherein
   the coating includes a metal or a metal oxide as a main component.

37. A resin composition, comprising at least one selected from the glass filler according to any one of claims 27 to 35 and the coated glass filler according to claim 36.

38. A paint, comprising at least one selected from the glass filler according to any one of claims 27 to 35 and the coated glass filler according to claim 36.

39. An ink composition, comprising at least one selected from the glass filler according to any one of claims 27 to 35 and the coated glass filler according to claim 36.

40. A cosmetic, comprising at least one selected from the glass filler according to any one of claims 27 to 35 and the coated glass filler according to claim 36.

41. A glass filler manufacturing method, comprising:

   melting the glass composition according to any one of claims 1 to 25; and
   shaping the molten glass composition into a glass filler.

FIG.1A

FIG.1B

FIG.2

FIG. 3

FIG.4

FIG.5

FIG.6

# EP 4 289 802 A1

## INTERNATIONAL SEARCH REPORT

| | International application No. |
|---|---|
| | **PCT/JP2022/004566** |

**A. CLASSIFICATION OF SUBJECT MATTER**

*C03C 3/091*(2006.01)i; *C03C 3/093*(2006.01)i; *C03C 3/097*(2006.01)i; *C03C 12/00*(2006.01)i
FI:   C03C3/091; C03C12/00; C03C3/097; C03C3/093

According to International Patent Classification (IPC) or to both national classification and IPC

**B. FIELDS SEARCHED**

Minimum documentation searched (classification system followed by classification symbols)

  C03C1/00-14/00

Documentation searched other than minimum documentation to the extent that such documents are included in the fields searched

  Published examined utility model applications of Japan 1922-1996
  Published unexamined utility model applications of Japan 1971-2022
  Registered utility model specifications of Japan 1996-2022
  Published registered utility model applications of Japan 1994-2022

Electronic data base consulted during the international search (name of data base and, where practicable, search terms used)

  INTERGLAD

**C. DOCUMENTS CONSIDERED TO BE RELEVANT**

| Category* | Citation of document, with indication, where appropriate, of the relevant passages | Relevant to claim No. |
|---|---|---|
| X | US 4166745 A (CORNING GLASS WORKS) 04 September 1979 (1979-09-04)<br>  column 1, lines 7-10, column 2, lines 1-13, 44-57, glass no. 1, 2, 8 | 1-10, 22-25 |
| X | JP 2016-528152 A (CORNING INC.) 15 September 2016 (2016-09-15)<br>  paragraph [0029], glass samples 34-36 | 1-6, 9, 10, 21-25 |
| X | JP 2010-64922 A (OHARA INC.) 25 March 2010 (2010-03-25)<br>  paragraphs [0002], [0006], [0017], examples 3, 5-7, 9, 10 | 1, 11, 21-25 |
| X | WO 2016/035674 A1 (NIPPON ELECTRIC GLASS CO., LTD.) 10 March 2016<br>(2016-03-10)<br>  examples 1, 2, 4, 5, 29, 31, 32, 34 | 1, 12, 18, 22-25 |
| X | JP 2001-122637 A (NIPPON ELECTRIC GLASS CO., LTD.) 08 May 2001 (2001-05-08)<br>  examples 2, 8 | 1, 13, 14, 22-25 |
| X | JP 2015-516356 A (EUROKERA S. N. C.) 11 June 2015 (2015-06-11)<br>  example 6 | 1, 15, 22-25 |

☑ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/004566** |

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2001-80935 A (NIHON FELLOW K.K.) 27 March 2001 (2001-03-27) <br> paragraph [0025], examples A, B | 1, 16, 22-25, 27-29, 32, 33, 35, 41 |
| X | JOURNAL OF NON-CRYSTALLINE SOLIDS, 15 July 2004, vol. 337, no. 3, pp. 232-240 <br> 2. Experimental procedure | 1, 17, 22-25 |
| X | Journal of the American Ceramic Society, September 2013, vol. 96, no. 9, pp. 2831-2838 <br> table 1 | 1, 17, 22-25 |
| X | JP 2017-520496 A (CORNING INC.) 27 July 2017 (2017-07-27) <br> glass no. 3, 10 | 1, 19, 22-25 |
| X | JP 2007-246365 A (NIPPON ELECTRIC GLASS CO., LTD.) 27 September 2007 (2007-09-27) <br> example 5 | 1, 20, 22-25 |
| X | JP 2011-162435 A (SCHOTT AG) 25 August 2011 (2011-08-25) <br> paragraphs [0002], [0032], [0056]-[0061], example 3 | 1, 27, 28, 32, 33, 37, 41 |
| X <br><br> Y | JP 2017-526607 A (PPG INDUSTRIES OHIO, INC.) 14 September 2017 (2017-09-14) <br> paragraphs [0060], [0061], [0069], [0070], example 117 | 1, 11, 21-28, 30, 31, 34, 37, 41 <br><br> 36, 38-40 |
| Y | WO 2010/024283 A1 (NIPPON SHEET GLASS CO., LTD.) 04 March 2010 (2010-03-04) <br> paragraphs [0001], [0002], [0070]-[0075] | 36, 38-40 |

Form PCT/ISA/210 (second sheet) (January 2015)

INTERNATIONAL SEARCH REPORT

Information on patent family members

International application No.

**PCT/JP2022/004566**

| Patent document cited in search report | | | Publication date (day/month/year) | Patent family member(s) | | | Publication date (day/month/year) |
|---|---|---|---|---|---|---|---|
| US | 4166745 | A | 04 September 1979 | (Family: none) | | | |
| JP | 2016-528152 | A | 15 September 2016 | US | 2015/0051060 | A1 | |
| | | | | WO | 2015/023525 | A1 | |
| | | | | paragraph [0026], glass sample 34-36 | | | |
| | | | | EP | 3033310 | A1 | |
| | | | | TW | 201512144 | A | |
| | | | | KR | 10-2016-0043026 | A | |
| | | | | CN | 105764865 | A | |
| JP | 2010-64922 | A | 25 March 2010 | WO | 2010/029967 | A1 | |
| | | | | EP | 2351716 | A1 | |
| | | | | paragraphs [0002], [0011], [0084], examples 1-3, 1-5, 1-6, 1-7, 1-9, 1-10 | | | |
| | | | | CN | 102143922 | A | |
| WO | 2016/035674 | A1 | 10 March 2016 | CN | 106660855 | A | |
| | | | | KR | 10-2017-0048315 | A | |
| | | | | TW | 201620849 | A | |
| JP | 2001-122637 | A | 08 May 2001 | (Family: none) | | | |
| JP | 2015-516356 | A | 11 June 2015 | US | 2015/0107575 | A1 | |
| | | | | example 6 | | | |
| | | | | WO | 2013/140081 | A1 | |
| | | | | EP | 2828214 | A1 | |
| JP | 2001-80935 | A | 27 March 2001 | EP | 1083155 | A1 | |
| | | | | paragraph [0028], examples A, B | | | |
| JP | 2017-520496 | A | 27 July 2017 | US | 2015/0314571 | A1 | |
| | | | | glass no. 3, 10 | | | |
| | | | | WO | 2015/168529 | A1 | |
| | | | | EP | 3137428 | A1 | |
| | | | | CN | 106470952 | A | |
| JP | 2007-246365 | A | 27 September 2007 | (Family: none) | | | |
| JP | 2011-162435 | A | 25 August 2011 | US | 2011/0218268 | A1 | |
| | | | | paragraphs [0003], [0059]-[0063], example 3 | | | |
| JP | 2017-526607 | A | 14 September 2017 | US | 2016/0068428 | A1 | |
| | | | | paragraphs [0060], [0061], [0069], [0070], example 117 | | | |
| | | | | WO | 2016/040425 | A1 | |
| | | | | EP | 3191421 | A1 | |
| WO | 2010/024283 | A1 | 04 March 2010 | US | 2011/0151261 | A1 | |
| | | | | paragraphs [0001], [0002], [0117]-[0124] | | | |
| | | | | EP | 2325147 | A1 | |
| | | | | KR | 10-2011-0044874 | A | |
| | | | | CN | 102131742 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63201041 A
- WO 2010024283 A1
- JP S62226839 A